# EUROPEAN PATENT APPLICATION

(11) **EP 4 831 707 A1**
(43) Date of publication of application: **28.10.2026**
(21) Application number: 25222219.5
(22) Date of filing: 10.12.2025
(51) Int. Cl.: G02B 6/43, G02B 6/12, G02B 6/30, G02B 6/42

(54) **CO-PACKAGED OPTICS ASSEMBLIES AND PACKAGES**

(30) Priority: 24.04.2025 US 202519188351
(71) Applicant: Intel Corporation, Santa Clara, CA 95054 (US)
(72) Inventor: SHAN, Bohan, Chandler, AZ 85226 (US); MAHAJAN, Ravindranath Vithal, Chandler, AZ 85248 (US); CHENG, Feifei, Chandler, AZ 85248 (US); ARRINGTON, Kyle Jordan, Gilbert, AZ 85297 (US); CHEN, Dekang, Chandler, AZ 85224 (US)
(74) Representative: HGF

(57) **Abstract**

Microelectronic assemblies, related devices and methods, are disclosed herein. In some embodiments, an assembly may include a photonic integrated circuit (PIC) having a surface; a first layer, on the surface of the PIC, the first layer including an electrical integrated circuit (EIC) surrounded by a first material; and a second layer, on the first layer, the second layer including a second material, a microlens, and an alignment feature. In some embodiments, the alignment feature of the second layer is a first alignment feature, and the photonic assembly may further include a medium for transmitting optical signals, on the second layer, the medium having a second alignment feature aligned with the first alignment feature, and an optical fiber arranged to receive an optical signal from the microlens.

## Description

### BACKGROUND

The demand for computing capabilities with enhanced data bandwidth is escalating in various domains, such as data centers and high-performance computing, e.g., for artificial intelligence (Al) and machine learning (ML) applications. This trend poses a significant challenge for the advancement of next-generation computing technologies. In response to this challenge, the emergence of Co-Packaged Optics (CPO) offers a promising solution. CPO integrates optical modules directly with the electrical die on the same package, eschewing the traditional approach of employing separate, pluggable modules. CPO combines the high-performance computing capabilities of EIC (Electric Integrated Circuits), including CPU and/or GPU, seamlessly with the high-bandwidth, low-power benefits of PIC (Photonic Integrated Circuit) modules for data transmission and switching. By consolidating the electrical and photonic components into a single, monolithic package, CPO facilitates a significant leap towards achieving exascale computing capability for next-generation technologies.

### BRIEF DESCRIPTION OF THE DRAWINGS

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
FIG. 1A is a schematic cross-sectional view of an example photonic assembly according to some embodiments of the present disclosure.
FIG. 1B is a schematic top view of the example photonic assembly of FIG. 1A.
FIG. 2A is a schematic cross-sectional view of another example photonic assembly according to some embodiments of the present disclosure.
FIG. 2B is a schematic top view of the example photonic assembly of FIG. 2A.
FIG. 3A is a schematic cross-sectional view of another example photonic assembly according to some embodiments of the present disclosure.
FIG. 3B is a schematic top view of the example photonic assembly of FIG. 3A.
FIG. 4A is a schematic cross-sectional view of yet another example photonic assembly according to some embodiments of the present disclosure.
FIG. 4B is a schematic top view of the example photonic assembly of FIG. 4A.
FIG. 5A is a schematic cross-sectional view of an example photonic assembly further including an optical component layer according to some embodiments of the present disclosure.
FIG. 5B is a schematic perspective view of the example photonic assembly of FIG. 5A.
FIG. 6A is a schematic perspective view of an example photonic assembly aligned with an example optical coupling structure according to some embodiments of the present disclosure.
FIG. 6B is a schematic perspective view of an example photonic assembly aligned with another example optical coupling structure according to some embodiments of the present disclosure.
FIG. 7A is a schematic cross-sectional view of an example photonic assembly according to some embodiments of the present disclosure.
FIG. 7B is a schematic cross-sectional view of another example photonic assembly according to some embodiments of the present disclosure.
FIGS. 8A-8E are schematic cross-sectional views of a portion of the example photonic assembly of FIG. 5A.
FIG. 9A is a schematic cross-sectional view of an example microelectronic assembly including a photonic assembly according to some embodiments of the present disclosure.
FIG. 9B is a schematic top view of the example microelectronic assembly of FIG. 9A.
FIGS. 10A-10F are schematic cross-sectional views of different stages of an example process for manufacturing a microelectronic assembly similar to FIG. 9A according to some embodiments of the present disclosure.
FIGS. 11A-11C are schematic cross-sectional views of different stages of an example process for manufacturing another microelectronic assembly similar to FIG. 9A according to some embodiments of the present disclosure.
FIG. 12A is a schematic cross-sectional view of an example microelectronic assembly including a photonic assembly illustrating singulation lines according to some embodiments of the present disclosure.
FIG. 12B is a schematic cross-sectional view of an example microelectronic assembly including photonic assemblies and optical connectors according to some embodiments of the present disclosure.
FIG. 13A is a schematic cross-sectional view of another example microelectronic assembly including a photonic assembly according to some embodiments of the present disclosure.
FIG. 13B is a schematic top view of the example microelectronic assembly of FIG. 13A.
FIGS. 14A-14E are schematic cross-sectional views of different stages of an example process for manufacturing a microelectronic assembly of FIG. 13A according to some embodiments of the present disclosure.
FIG. 15A is a schematic cross-sectional view of another example microelectronic assembly including a photonic assembly according to some embodiments of the present disclosure.
FIGS. 15B and 15C are schematic top views of the example microelectronic assembly of FIG. 15A.
FIGS. 16A and 16B are schematic cross-sectional views of another example microelectronic assembly including a photonic interposer according to some embodiments of the present disclosure.
FIG. 16C is a schematic top view of the example microelectronic assemblies of FIGS. 16A and 16B illustrating optical pathways according to some embodiments of the present disclosure.
FIG. 17 is a cross-sectional view of a device package that may include one or more assemblies in accordance with any of the embodiments disclosed herein.
FIG. 18 is a cross-sectional side view of a device assembly that may include one or more assemblies in accordance with any of the embodiments disclosed herein.
FIG. 19 is a block diagram of an example computing device that may include one or more assemblies in accordance with any of the embodiments disclosed herein.
FIG. 20 is a block diagram of a photonic device that may include one or more assemblies in accordance with any of the embodiments disclosed herein.

### DETAILED DESCRIPTION

For purposes of illustrating CPOs described herein, it is important to understand phenomena that may come into play during assembly and packaging of PICs. The following foundational information may be viewed as a basis from which the present disclosure may be properly explained. Such information is offered for purposes of explanation only and, accordingly, should not be construed in any way to limit the broad scope of the present disclosure and its potential applications.

Metal communication lines, such as copper or aluminum wires, have traditionally been used for communication within and between microelectronic devices (e.g., IC dies). Metals are excellent conductors of electricity, and they facilitate the transmission of electrical signals over short distances at very high speeds. Metal interconnects are commonly used for on-chip communication, connecting transistors, logic gates, and other components within a microchip. However, as microelectronics have continued to shrink in size and increase in complexity, the limitations of metal interconnects have become more apparent. These limitations include resistance, capacitance, and signal propagation delays, which can lead to power consumption, heat generation, and signal integrity issues.

Optical communications provide an alternative to metal interconnects in microelectronics. Optical connections use light to transmit data within and between electronic components. Optical communications can address some of the limitations of metal interconnects and offer several advantages, including high-speed data transfer, immunity to electromagnetic interference, and lower power consumption.

The connectivity between these IC dies is achievable by many ways. For example, in 2.5D packaging solutions, a silicon interposer and through-silicon vias (TSVs) connect dies at silicon interconnect speed in a minimal footprint. In another example, a silicon bridge embedded under the edges of two interconnecting dies facilitates electrical coupling between them. In a three-dimensional (3D) architecture, the dies are stacked one above the other, creating a smaller footprint overall. Typically, the electrical connectivity and mechanical coupling in such 3D architecture is achieved using TSVs and high pitch solder-based bumps (e.g., C2 interconnections). The bridge and the 3D stacked architecture may also be combined to allow for top-packaged chips to communicate with other chips horizontally using the bridge and vertically, using Through-Mold Vias (TMVs) which are typically larger than TSVs. However, these current interconnect technologies use solder or its equivalent for connectivity, with consequent low vertical and horizontal interconnect density.

Another conventional solution is to use an interposer, which improves vertical interconnect density but suffers from low lateral interconnect density if the base wafer of the interposer is passive. In a general sense, an "interposer" is commonly used to refer to a base piece of silicon that interconnects two dies. By including active circuit elements in the interposer, lateral speeds may be improved, but it requires more expensive manufacturing processes, in particular when a large base die is used to interconnect smaller dies. Additionally, not all interfaces require fine pitch connections which may lead to additional manufacturing and processing overheads without the benefits of the fine pitch.

Integrating optical communications into IC packages (e.g., CPOs) provides alternative communication pathways, but further increases the complexity. Contemporary optical communications and other systems often employ PICs. Smaller, faster, and less expensive optical elements can enable universal, low-cost, high-volume optical communications needed for fast and efficient communication technologies demanded by high volume internet data traffic. In optical communications, information is transmitted by way of an optical carrier whose frequency typically is in the visible or near-infrared region of the electromagnetic spectrum. A carrier with such a high frequency is sometimes referred to as an optical signal, an optical carrier, a light wave signal, or, simply, light. A typical optical communications network includes several optical fibers, each of which may include several channels. A channel is a specified frequency band of an electromagnetic signal and is sometimes referred to as a wavelength. Technological advances today enable implementing portions of optical communication systems at the IC (or chip or die) level in PICs. Packaging such PICs presents many challenges.

In a general sense, a PIC integrates photonic functions for information signals imposed on electromagnetic waves, e.g., electromagnetic waves of optical wavelengths. PICs find application in fiber-optic communication, medical, security, sensing, and photonic computing systems. The PIC may implement one or more optical and electro-optical devices such as lasers, photodetectors, waveguides, and modulators on a single semiconductor chip. In addition, the PIC may also include electrical circuitry to process electrical signals corresponding to these optical signals. Such integrated PICs have both photonic processing and electrical signal processing in a same process node which may limit optimization. In other embodiments, PIC may be in a separate process node that optimizes PIC performance and electrical signal processing may be in a different process node that optimizes the electrical high-speed performance.

Co-packaging the PIC is not trivial. Among the challenges is a need for parallel tight-pitch interconnects that enable high density, high bandwidth electrical communication between the PIC and other electrical devices with simultaneous optical access to the PIC for the optical signals. Indeed, getting optical signals into and out of PICs is a driver of manufacturing cost and complexity. In addition, coupling a fiber-optic cable, also sometimes referred to as "optical fiber" or, simply, a "fiber," to a PIC so that electromagnetic signals, e.g., optical signals, may exchange between the two is challenging, One way to couple a PIC to a fiber is to implement edge-coupling by using an intermediate optical coupling structure (OCS) (sometimes referred to as "fiber connector," "fiber coupler," "fiber assembly unit" (FAU), or "fiber array block") that has one end optically coupled to a fiber and an opposite end positioned proximate to and optically coupled to a PIC so that electromagnetic signals may be exchanged between the PIC and the fiber, via the OCS.

However, because the signals require a transparent medium for propagation, the PIC must be typically exposed in the package to allow the fiber to be coupled to the PIC with sufficient stability even in such edge-coupled assemblies. For example, in some packaging architectures, the PIC has an overhang to couple to the fiber which presents at the edge of the package. In another example, the PIC is located in a cavity so that it is exposed, and the fiber, which presents at the package edge, is coupled to the exposed face. Both these architectures cannot support small footprint PICs because a substantial area of the PIC having functional structures and circuitry is used up in coupling to the fiber. They are also limited in the density of their electrical interconnects to other ICs in the package.

For major CPO products on market, existing solutions for fiber-to-chip coupling include edge coupling by V-groove structures and vertical coupling using grating couplers. Edge couplers offer the advantage of broad bandwidth and easy assembly, while vertical couplers based on grating couplers provide high channel density but limited spectrum width and can potentially impede thermal management. Furthermore, both of these solutions require post-assembly attachment, which presents high difficulty in alignment control and limits the yield for scalable production.

In one aspect of the present disclosure, an example of CPO architecture includes a photonic assembly where an EIC is coupled to a top surface of a PIC using high-density interconnects such that a z-height offset between PIC electrical and optical connections is minimal, and the EIC is surrounded by a material for transmitting optical signals to/from the PIC. Further, such photonic assemblies can be incorporated into a CPO system, a microelectronic assembly, or other multi-die IC packages, and the fabrication can be accomplished during wafer-level processing, which promotes scalable manufacturing with low cost.

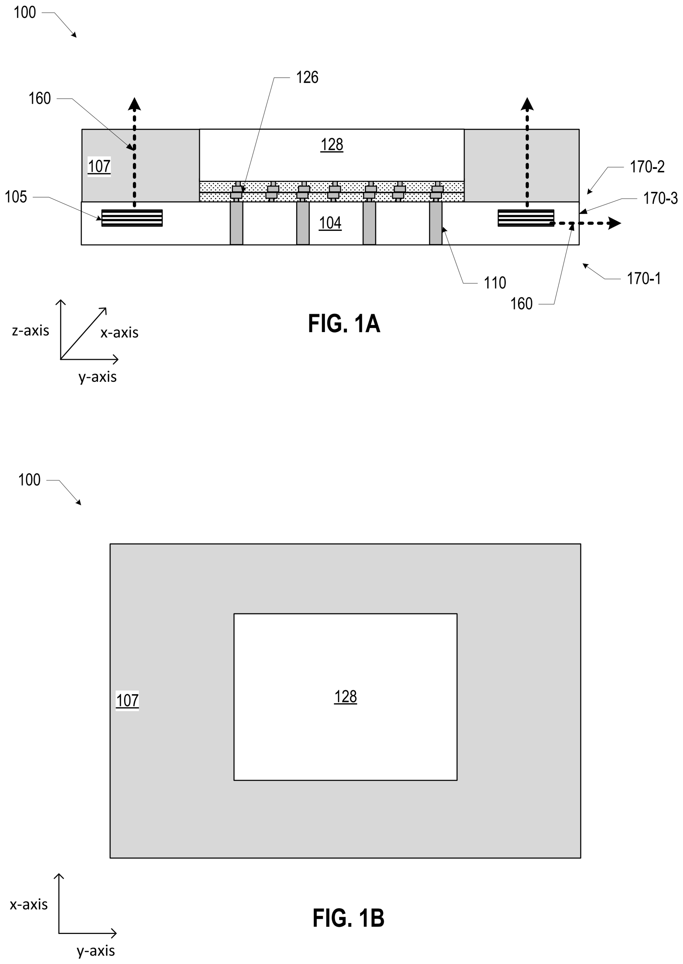

As used herein, "high-density interconnects" include interconnects having a pitch of less than 10 microns. As used herein, pitch is measured center-to-center (e.g., from a center of an interconnect to a center of an adjacent interconnect). In some embodiments, interconnects, such as interconnects 126 described below with reference to FIG. 1A, may have a pitch between 1 micron and 130 microns (e.g., a pitch between 1 micron and 10 microns, a pitch between 10 microns and 50 microns, or a pitch between 30 microns and 130 microns).

Accordingly, assemblies, related devices and methods, are disclosed herein. In some embodiments, an assembly may include a photonic integrated circuit (PIC) having a surface; a first layer, on the surface of the PIC, the first layer including an electrical integrated circuit (EIC) surrounded by a first material; and a second layer, on the first layer, the second layer including a second material, a microlens, and an alignment feature. In some embodiments, the alignment feature of the second layer is a first alignment feature, and the photonic assembly may further include a medium for transmitting optical signals, on the second layer, the medium having a second alignment feature aligned with the first alignment feature, and an optical fiber arranged to receive an optical signal from the microlens.

Each of the structures, assemblies, packages, methods, devices, and systems of the present disclosure may have several innovative aspects, no single one of which is solely responsible for all the desirable attributes disclosed herein. Details of one or more implementations of the subject matter described in this specification are set forth in the description below and the accompanying drawings.

In the following detailed description, various aspects of the illustrative implementations may be described using terms commonly employed by those skilled in the art to convey the substance of their work to others skilled in the art.

The terms "circuit" and "circuitry" mean one or more passive and/or active electrical and/or electronic components that are arranged to cooperate with one another to provide a desired function. The terms also refer to analog circuitry, digital circuitry, hard wired circuitry, programmable circuitry, microcontroller circuitry and/or any other type of physical hardware electrical and/or electronic component.

The term "integrated circuit" (IC) means a circuit that is integrated into a monolithic semiconductor or analogous material.

In some embodiments, the IC dies disclosed herein may comprise substantially monocrystalline semiconductors, such as silicon or germanium, as a base material (e.g., substrate, body) on which integrated circuits are fabricated with traditional semiconductor processing methods. The semiconductor base material may include, for example, N-type or P-type materials. Dies may include, for example, a crystalline base material formed using a bulk silicon (or other bulk semiconductor material) or a silicon-on-insulator (SOI) structure. In some other embodiments, the base material of one or more of the IC dies may comprise alternate materials, which may or may not be combined with silicon, that include but are not limited to germanium, indium antimonide, lead telluride, indium arsenide, indium phosphide, gallium arsenide, indium gallium arsenide, gallium antimonide, or other combinations of group III-N, group III-V, group II-VI, or group IV materials. In yet other embodiments, the base material may comprise compound semiconductors, for example, with a first sub-lattice of at least one element from group III of the periodic table (e.g., Al, Ga, In), and a second sub-lattice of at least one element of group V of the periodic table (e.g., P, As, Sb). In yet other embodiments, the base material may comprise an intrinsic IV or III-V semiconductor material or alloy, not intentionally doped with any electrically active impurity; in alternate embodiments, nominal impurity dopant levels may be present. In still other embodiments, dies may comprise a non-crystalline material, such as polymers; for example, the base material may comprise silica-filled epoxy. In other embodiments, the base material may comprise high mobility oxide semiconductor material, such as tin oxide, antimony oxide, indium oxide, indium tin oxide, titanium oxide, zinc oxide, indium zinc oxide, indium gallium zinc oxide (IGZO), gallium oxide, titanium oxynitride, ruthenium oxide, or tungsten oxide. In general, the base material may include one or more of tin oxide, cobalt oxide, copper oxide, antimony oxide, ruthenium oxide, tungsten oxide, zinc oxide, gallium oxide, titanium oxide, indium oxide, titanium oxynitride, indium tin oxide, indium zinc oxide, nickel oxide, niobium oxide, copper peroxide, IGZO, indium telluride, molybdenite, molybdenum diselenide, tungsten diselenide, tungsten disulfide, N- or P-type amorphous or polycrystalline silicon, germanium, indium gallium arsenide, silicon germanium, gallium nitride, aluminum gallium nitride, indium phosphide, and black phosphorus, each of which may possibly be doped with one or more of gallium, indium, aluminum, fluorine, boron, phosphorus, arsenic, nitrogen, tantalum, tungsten, and magnesium, etc. Although a few examples of the material for dies are described here, any material or structure that may serve as a foundation (e.g., base material) upon which IC circuits and structures as described herein may be built falls within the spirit and scope of the present disclosure.

Unless described otherwise, IC dies described herein include one or more IC structures (or, simply, "ICs") implementing (i.e., configured to perform) certain functionality. In one such example, the term "memory die" may be used to describe a die that includes one or more ICs implementing memory circuitry (e.g., ICs implementing one or more of memory devices, memory arrays, control logic configured to control the memory devices and arrays, etc.). In another such example, the term "compute die" may be used to describe a die that includes one or more ICs implementing logic/compute circuitry (e.g., ICs implementing one or more of I/O functions, arithmetic operations, pipelining of data, etc.).

In another example, the terms "package" and "IC package" are synonymous, as are the terms "die," "IC," and "IC die." Note that the terms "chip," "chiplet," "die," "IC," and "IC die" are used interchangeably herein. The terms "bridge die," "interconnect bridge," and "interconnect die" are used interchangeably herein.

The term "insulating" means "electrically insulating," the term "conducting" means "electrically conducting," unless otherwise specified. With reference to optical signals and/or devices, components and elements that operate on or using optical signals, the term "conducting" can also mean "optically conducting."

The terms "oxide," "carbide," "nitride," etc. refer to compounds containing, respectively, oxygen, carbon, nitrogen, etc.

The term "high-k dielectric" refers to a material having a higher dielectric constant than silicon oxide, while the term "low-k dielectric" refers to a material having a lower dielectric constant than silicon oxide.

The term "insulating material" or "insulator" (also called herein as "dielectric material" or "dielectric") refers to solid materials (and/or liquid materials that solidify after processing as described herein) that are substantially electrically nonconducting. They may include, as examples and not as limitations, organic polymers and plastics, and inorganic materials such as ionic crystals, porcelain, glass, silicon, silicon oxide, silicon carbide, silicon carbonitride, silicon nitride, and alumina or a combination thereof. They may include dielectric materials, high polarizability materials, and/or piezoelectric materials. A dielectric material may include any suitable dielectric material commonly used in semiconductor manufacture, such as silicon and one or more of oxygen, nitrogen, hydrogen, and carbon (e.g., in the form of silicon oxide, silicon nitride, silicon oxynitride, or silicon carbon nitride); a polyimide material; or a low-k or ultra low-k dielectric (e.g., carbon-doped dielectrics, fluorine-doped dielectrics, porous dielectrics, organic polymeric dielectrics, photo-imageable dielectrics, and/or benzocyclobutene-based polymers). They may be transparent or opaque without departing from the scope of the present disclosure. Further examples of insulating materials are underfills and molds or mold-like materials used in packaging applications, including for example, materials used in organic interposers, package supports and other such components.

In various embodiments, elements associated with an IC may include, for example, transistors, diodes, power sources, resistors, capacitors, inductors, sensors, transceivers, receivers, antennas, etc. In various embodiments, elements associated with an IC may include those that are monolithically integrated within an IC, mounted on an IC, or those connected to an IC. The ICs described herein may be either analog or digital and may be used in a number of applications, such as microprocessors, optoelectronics, logic blocks, audio amplifiers, etc., depending on the components associated with the IC. The ICs described herein may be employed in a single IC die or as part of a chipset for executing one or more related functions in a computer.

In various embodiments of the present disclosure, transistors described herein may be field-effect transistors (FETs), e.g., MOSFETs. In many embodiments, an FET is a four-terminal device. In silicon-on-insulator, or nanoribbon, or gate all-around (GAA) FET, the FET is a three-terminal device that includes source, drain, and gate terminals and uses electric field to control current flowing through the device. A FET typically includes a channel material, a source region and a drain regions provided in and/or over the channel material, and a gate stack that includes a gate electrode material, alternatively referred to as a "work function" material, provided over a portion of the channel material (the "channel portion") between the source and the drain regions, and optionally, also includes a gate dielectric material between the gate electrode material and the channel material.

In a general sense, an "interconnect" refers to any element that provides a physical connection between two other elements. For example, an electrical interconnect provides electrical connectivity between two electrical components, facilitating communication of electrical signals between them; an optical interconnect provides optical connectivity between two optical components, facilitating communication of optical signals between them. As used herein, both electrical interconnects and optical interconnects are comprised in the term "interconnect." The nature of the interconnect being described is to be understood herein with reference to the signal medium associated therewith. Thus, when used with reference to an electronic device, such as an IC that operates using electrical signals, the term "interconnect" describes any element formed of an electrically conductive material for providing electrical connectivity to one or more elements associated with the IC or/and between various such elements. In such cases, the term "interconnect" may refer to both conductive traces (also sometimes referred to as "lines," "wires," "metal lines" or "trenches") and conductive vias (also sometimes referred to as "vias" or "metal vias"). Sometimes, electrically conductive traces and vias may be referred to as "conductive traces" and "conductive vias", respectively, to highlight the fact that these elements include electrically conductive materials such as metals. Likewise, when used with reference to a device that operates on optical signals as well, such as a PIC, "interconnect" may also describe any element formed of a material that is optically conductive for providing optical connectivity to one or more elements associated with the PIC. In such cases, the term "interconnect" may refer to optical waveguides, including optical fiber, optical splitters, optical combiners, optical couplers, and optical vias.

As used herein, the term "optical element" includes arrangements of forms fabricated in ICs to receive, transform and/or transmit optical signals as described herein. It may include optical conductors such as waveguides, grating coupler, electromagnetic radiation sources such as lasers, and electro-optical devices such as photodetectors.

The term "waveguide" refers to any structure that acts to confine and guide the propagation of light from one location to another location typically through a substrate material such as silicon or glass. In various examples, waveguides can be formed from silicon, doped silicon, silicon nitride, glasses such as silica (e.g., silicon dioxide or SiO₂), borosilicate (e.g., 70-80 wt% SiO₂, 7-13 wt% of B₂O₃, 4-8 wt% Na₂O or K₂O, and 2-8 wt% of Al₂O₃) and so forth. Waveguides may be formed using various techniques including but not limited to forming waveguides in situ. For example, in some embodiments, waveguides may be formed in situ in glass using low temperature glass-to-glass bonding or by laser direct writing (e.g., a laser written waveguide). Waveguides formed in situ may have lower loss characteristics.

The term "conductive trace" may be used to describe an electrically conductive element isolated by an insulating material. Within IC dies, such insulating material comprises interlayer low-k dielectric that is provided within the IC die. Within package substrates, and printed circuit boards (PCBs) such insulating material comprises organic materials such as Ajinomoto Buildup Film (ABF), polyimides, or epoxy resin. Such conductive lines are typically arranged in several levels, or several layers, of metallization stacks.

The term "conductive via" may be used to describe an electrically conductive element that interconnects two or more conductive lines of different levels of a metallization stack. To that end, a via may be provided substantially perpendicularly to the plane of an IC die/chip or a support structure over which an IC structure is provided and may interconnect two conductive lines in adjacent levels or two conductive lines in non-adjacent levels.

The term "package substrate" may be used to describe any substrate material that facilitates the packaging together of any collection of semiconductor dies and/or other electrical components such as passive electrical components. As used herein, a package substrate may be formed of any material including, but not limited to, insulating materials such as resin impregnated glass fibers (e.g., PCB or Printed Wiring Boards (PWB)), glass, ceramic, silicon, silicon carbide, etc. In addition, as used herein, a package substrate may refer to a substrate that includes buildup layers (e.g., ABF layers).

The term "metallization stack" may be used to refer to a stack of one or more interconnects for providing connectivity to different circuit components of an IC die/chip and/or a package substrate.

As used herein, the term "pitch" of interconnects refers to a center-to-center distance between adjacent interconnects.

The terms "substantially," "close," "approximately," "near," and "about," generally refer to being within +/- 20% of a target value (e.g., within +/- 5% or 10% of a target value) based on the context of a particular value as described herein or as known in the art.

Terms indicating orientation of various elements, e.g., "coplanar," "perpendicular," "orthogonal," "parallel," or any other angle between the elements, generally refer to being within +/- 5%-20% of a target value based on the context of a particular value as described herein or as known in the art.

The term "connected" means a direct connection (which may be one or more of a mechanical, electrical, and/or thermal connection) between the things that are connected, without any intermediary devices, while the term "coupled" means either a direct connection between the things that are connected, or an indirect connection through one or more passive or active intermediary devices.

The description uses the phrases "in an embodiment" or "in embodiments," which may each refer to one or more of the same or different embodiments.

Furthermore, the terms "comprising," "including," "having," and the like, as used with respect to embodiments of the present disclosure, are synonymous.

The disclosure may use perspective-based descriptions such as "above," "below," "top," "bottom," and "side"; such descriptions are used to facilitate the discussion and are not intended to restrict the application of disclosed embodiments.

The terms "over," "under," "between," and "on" as used herein refer to a relative position of one material layer or component with respect to other layers or components. For example, one layer disposed over or under another layer may be directly in contact with the other layer or may have one or more intervening layers. Moreover, one layer disposed between two layers may be directly in contact with one or both of the two layers or may have one or more intervening layers. In contrast, a first layer described to be "on" a second layer refers to a layer that is in direct contact with that second layer. Similarly, unless explicitly stated otherwise, one feature disposed between two features may be in direct contact with the adjacent features or may have one or more intervening layers.

The term "dispose" as used herein refers to position, location, placement, and/or arrangement rather than to any particular method of formation.

The term "between," when used with reference to measurement ranges, is inclusive of the ends of the measurement ranges.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B, and C). When used herein, the notation "A/B/C" means (A), (B), and/or (C).

Although certain elements may be referred to in the singular herein, such elements may include multiple sub-elements. For example," an electrically conductive material" may include one or more electrically conductive materials. In another example, "a dielectric material" may include one or more dielectric materials.

Unless otherwise specified, the use of the ordinal adjectives "first," "second," and "third," etc., to describe a common object, merely indicate that different instances of like objects are being referred to, and are not intended to imply that the objects so described must be in a given sequence, either temporally, spatially, in ranking or in any other manner.

In the following detailed description, reference is made to the accompanying drawings that form a part hereof, and in which is shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

The accompanying drawings are not necessarily drawn to scale.

In the drawings, same reference numerals refer to the same or analogous elements/materials shown so that, unless stated otherwise, explanations of an element/material with a given reference numeral provided in context of one of the drawings are applicable to other drawings where element/materials with the same reference numerals may be illustrated. Further, the singular and plural forms of the labels may be used with reference numerals to denote a single one and multiple ones respectively of the same or analogous type, species, or class of element.

Furthermore, in the drawings, some schematic illustrations of example structures of various devices and assemblies described herein may be shown with precise right angles and straight lines, but it is to be understood that such schematic illustrations may not reflect real-life process limitations which may cause the features to not look so "ideal" when any of the structures described herein are examined using, e.g., images of suitable characterization tools such as scanning electron microscopy (SEM) images, transmission electron microscope (TEM) images, or non-contact profilometer. In such images of real structures, possible processing and/or surface defects could also be visible, e.g., surface roughness, curvature or profile deviation, pit or scratches, not-perfectly straight edges of materials, tapered vias or other openings, inadvertent rounding of corners or variations in thicknesses of different material layers. There may be other defects not listed here but that are common within the field of device fabrication and/or packaging. Inspection of layout and mask data and reverse engineering of parts of a device to reconstruct the circuit using e.g., optical microscopy or transmission electron microscopy, and/or inspection of a cross-section of a device to detect the shape and the location of various device elements described herein using, e.g., Physical Failure Analysis (PFA) would allow determination of presence of optical couplers as described herein.

Note that in the figures, various components (e.g., interconnects) are shown as aligned (e.g., at respective interfaces) merely for ease of illustration; in actuality, some or all of them may be misaligned. In addition, there may be other components, such as bond-pads, landing pads, metallization, etc. present in the assembly that are not shown in the figures to prevent cluttering. Further, the figures are intended to show relative arrangements of the components within their assemblies, and, in general, such assemblies may include other components that are not illustrated (e.g., various interfacial layers or various other components related to optical functionality, electrical connectivity, or thermal mitigation). For example, in some further embodiments, the assembly as shown in the figures may include more dies along with other electrical components. Additionally, although some components of the assemblies are illustrated in the figures as being planar rectangles or formed of rectangular solids, this is simply for ease of illustration, and embodiments of these assemblies may be curved, rounded, or otherwise irregularly shaped as dictated by and sometimes inevitable due to the manufacturing processes used to fabricate various components.

In the drawings, a particular number and arrangement of structures and components are presented for illustrative purposes and any desired number or arrangement of such structures and components may be present in various embodiments.

Further, unless otherwise specified, the structures shown in the figures may take any suitable form or shape according to material properties, fabrication processes, and operating conditions.

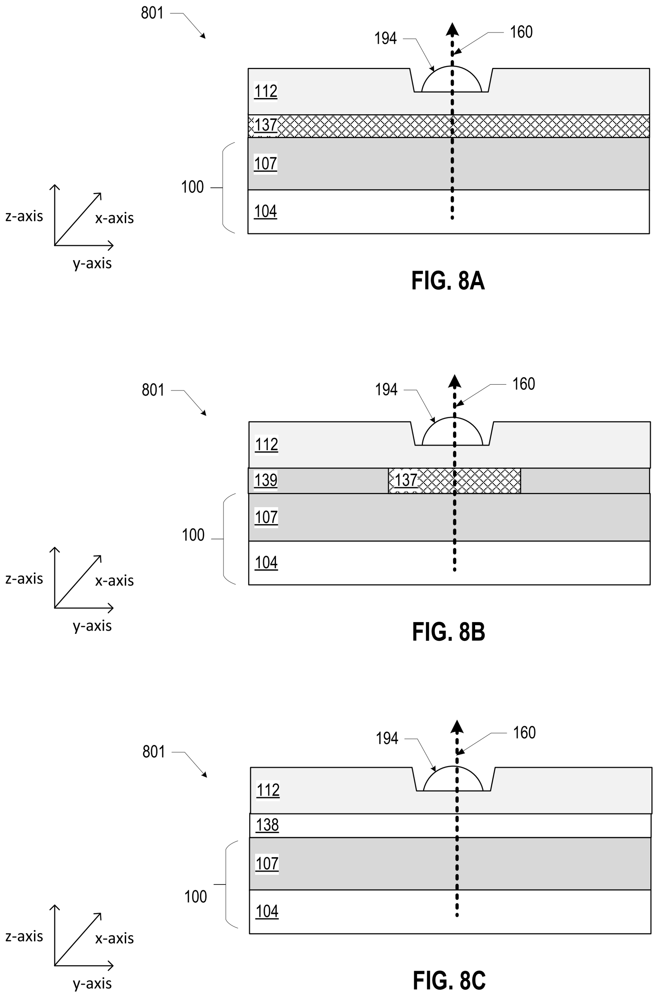

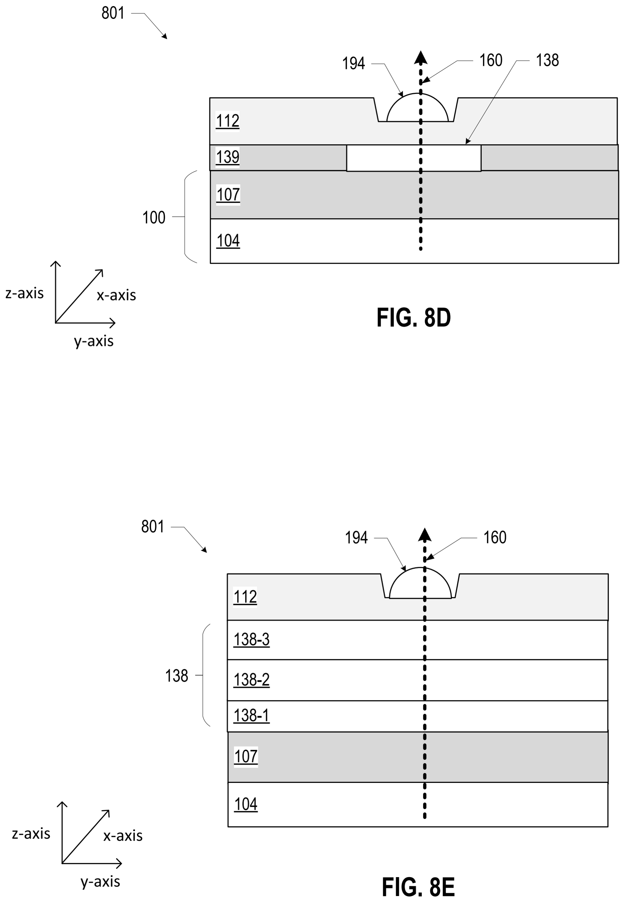

For convenience, if a collection of drawings designated with different letters are present (e.g., FIGS. 8A-8E), such a collection may be referred to herein without the letters (e.g., as "FIG. 8"). Similarly, if a collection of reference numerals designated with different numerals or letters are present (e.g., 194-1, 194-2, etc.), such a collection may be referred to herein without the numerals or letters (e.g., as "194").

Various operations may be described as multiple discrete actions or operations in turn in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed, and/or described operations may be omitted in additional embodiments.

FIG. 1A is a schematic cross-sectional view of an example assembly 100 according to some embodiments of the present disclosure. As used herein, the terms "assembly," "microelectronic assembly," "photonic package," "photonic assembly," "IC package," and similar variations may be used interchangeably. The assembly 100 comprises a PIC 104 having through-substrate vias (TSVs) 110, an EIC 128 on PIC 104 and surrounded by an optical material 107, and an optical pathway 160 extending from an optical element 105 in PIC 104. As used herein, the term "optical pathway" refers to a path or trajectory by which light propagates from one location to another location through an optical medium. In some embodiments, an optical pathway 160 may include one or more optical elements 105, such as a waveguide or reflector, that guide the path of light. In particular, PIC 104 may include a first surface 170-1 (e.g., a bottom surface), an opposing second surface 170-2 (e.g., a top surface), and a lateral surface 170-3 (e.g., a side surface) substantially perpendicular to the first and second surfaces 170-1, 170-2, where PIC 104 includes an optical pathway 160 extending vertically through the second surface 170-2 to/from an optical element 105 through the optical material 107 and/or an optical pathway extending horizontally through the lateral surface 170-3 to/from an optical element 105. As used herein, the optical material 107 may refer to a material having optical properties for transmitting optical signals. In some embodiments, the optical material 107 may include silicon and oxygen (e.g., in the form of silicon oxide); silicon, carbon, and nitrogen (e.g., in the form of silicon carbonitride); silicon and nitrogen (e.g., in the form of silicon nitride); or a photo-imageable dielectric having a percent transmission between greater than or equal to 95 percent and a refractive index (RI) between 1.3 and 1.6. The optical material 107 may be coupled to the second surface 170-2 of PIC 104 using any suitable technique, such as by fusion bonding (i.e., dielectric-dielectric bonds with no metal-metal bonds at the interface).

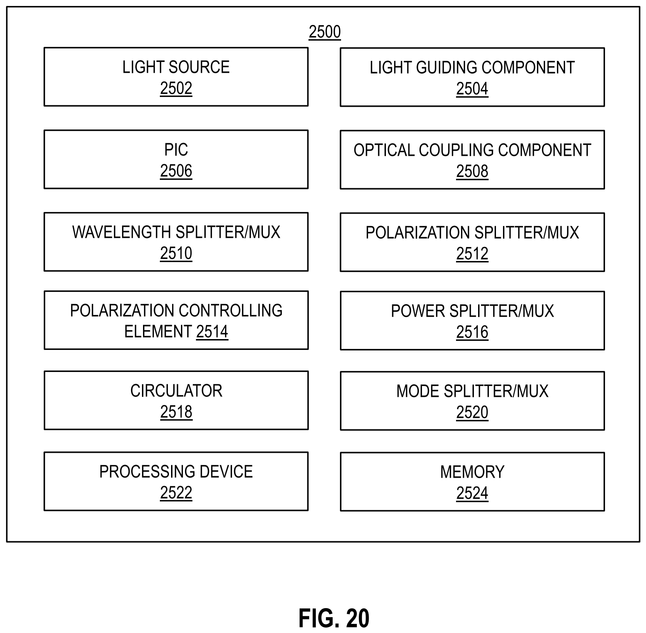

PIC 104 may include any suitable optical elements 105. Example optical elements include an electromagnetic radiation source, an electro-optical device, and a waveguide. Although only three such example optical elements are provided, it may be understood that PIC 104 may include more optical elements of the same or different types that enable it to function appropriately as a photonic device receiving, transforming, and transmitting optical and electrical signals, including any described below related to PIC 2506 of FIG. 20. In many embodiments, the optical elements may be fabricated on a surface (e.g., second surface 170-2) using any known method in the art, including semiconductor photolithographic and deposition methods. In some embodiments, the optical elements may be confined within a portion of a surface (e.g., second surface 170-2), as shown. PIC 104 may be configured to transmit and/or receive an optical signal at the second surface 170-2. For example, PIC 104 may include optical elements, such as a grating coupler, that allow PIC 104 to transmit and/or receive light through the second surface 170-2 (e.g., vertical transmission and reception of light). In some embodiments, a PIC 104 may be configured to transmit and/or receive an optical signal at a lateral surface 170-3. In such examples, PIC 104 may include optical elements, such as an edge coupler or an angled reflector with a grating coupler, that allow PIC 104 to transmit and/or receive light through a lateral surface 170-3 (e.g., lateral transmission and reception of light).

In general, the light provided to PIC 104 may include any electromagnetic signals having information encoded therein (or, phrased differently, any electromagnetic signals modulated to include information). Often times, the electromagnetic signals are signals associated with optical amplitudes, phases, and wavelengths and, therefore, descriptions provided herein refer to "optical" signals (or light) and "optical" components. However, assembly 100 with PIC 104, as described herein, are not limited to operating with electromagnetic signals of optical spectrum and descriptions provided herein with reference to optical signals and/or optical elements are equally applicable to electromagnetic signals of any suitable wavelength, such as electromagnetic signals in near-infrared (NIR) and/or shortwave infrared (SWIR) bands, as well as electromagnetic signals in the RF and/or microwave bands. In particular, some embodiments disclosed herein use an optical material 107 that is transparent at a particular electromagnetic signal wavelength, for example, silicon oxide is transparent at a wavelength range between 800 nanometers and 1310 nanometers (i.e., NIR and SWIR bands).

PIC 104 may comprise a semiconductor material including, for example, N-type or P-type materials. PIC 104 may include, for example, a crystalline substrate formed using a bulk silicon (or other bulk semiconductor material) or a SOI structure (or, in general, a semiconductor-on-insulator structure). In some embodiments, PIC 104 may be formed using alternative materials, which may or may not be combined with silicon, that include, but are not limited to, lithium niobite, indium phosphide, silicon dioxide, germanium, silicon germanium, indium antimonide, lead telluride, indium arsenide, indium phosphide, gallium arsenide, aluminum gallium arsenide, aluminum arsenide, indium aluminum arsenide, aluminum indium antimonide, indium gallium arsenide, gallium nitride, indium gallium nitride, aluminum indium nitride or gallium antimonide, or other combinations of group III-N or group IV materials. In some embodiments, PIC 104 may comprise a non-crystalline material, such as polymers. The TSVs 110 in PIC 104 may be formed of any appropriate conductive material, such as copper, silver, nickel, gold, aluminum, or other metals or alloys, for example. Although a few examples of the material for PIC 104 are described here, any material or structure that may serve as a foundation upon which PIC 104 may be built falls within the spirit and scope of the present disclosure.

EIC 128 may be electrically coupled at the second surface 170-2 to the TSVs 110 in PIC 104 by interconnects 126 with a pitch of between 2 microns and 70 microns between adjacent interconnects 126. An example of interconnect 126 in some embodiments is a hybrid bond, comprising metal-metal and dielectric-dielectric bonds. EIC 128 may be configured to electrically integrate with PIC 104 to achieve an intended functionality of assembly 100. For example, EIC 128 may be an Application Specific IC (ASIC), including one or more switch or driver/receiver circuits used in optical communication systems. In some embodiments, EIC 128 may include circuitry for communicating between two or more IC dies, for example, EIC 128 may function as an interconnect bridge having appropriate circuitry on/in a semiconductor substrate to connect at silicon-interconnect speeds with a small footprint. In some embodiments, EIC 128 may comprise active components, including one or more transistors, voltage converters, trans-impedance amplifiers (TIA), serializer and de-serializer (SERDES), clock and data recovery (CDR) components, microcontrollers, etc. In some embodiments, EIC 128 may comprise passive circuitry sufficient to enable interconnection to PIC 104.

FIG. 1B is a schematic top view of the example assembly of FIG. 1A. As shown in FIG. 1B, EIC 128 may be positioned in a center and the optical material 107 may surround EIC 128, such that optical pathways 160 (not shown) may be along a perimeter of PIC 104, as shown in FIG. 1A.

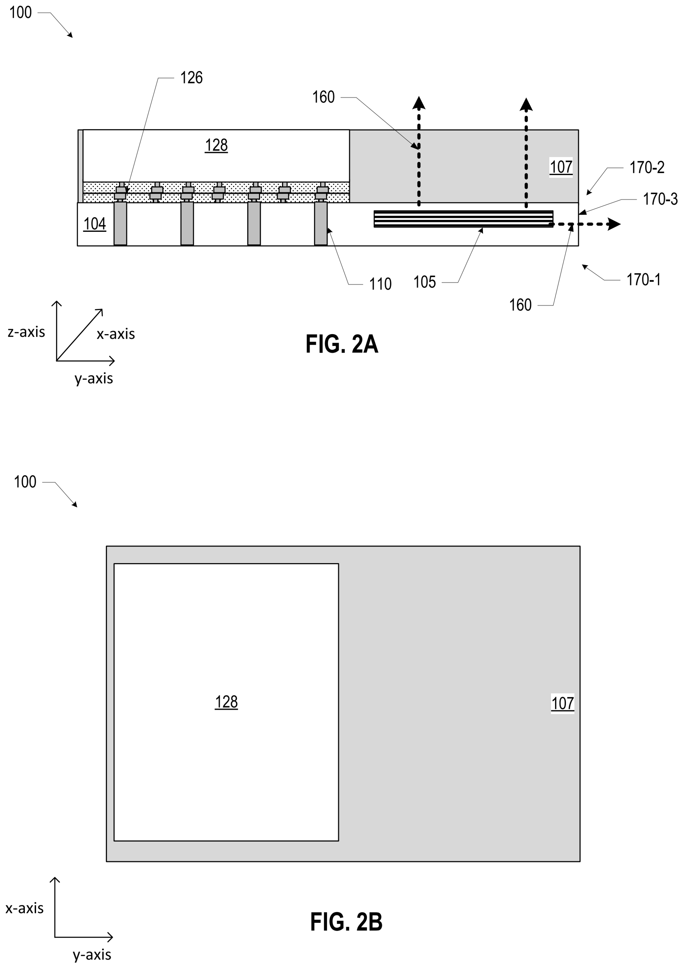

FIG. 2A is a schematic cross-sectional view of another example assembly according to some embodiments of the present disclosure. The configuration of the embodiment shown in the figure is like that of FIG. 1A, except for differences as described further. The configuration of assembly 100 as described herein includes EIC 128 positioned along an edge (e.g., a lateral surface 170-3) of PIC 104 and surrounded by an optical material 107.

FIG. 2B is a schematic top view of the example assembly of FIG. 2A. As shown in FIG. 2B, EIC 128 may be positioned in towards an edge or side of PIC 104 and the optical material 107 may surround EIC 128, such that optical pathways 160 (not shown) may be along a side portion of PIC 104, as shown in FIG. 2A.

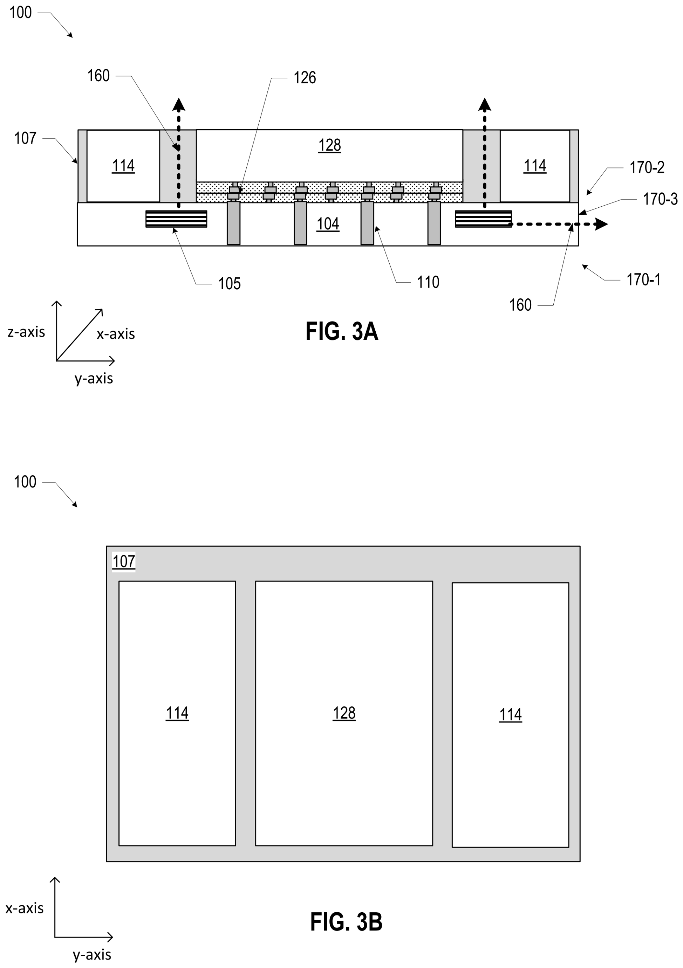

FIG. 3A is a schematic cross-sectional view of another example assembly according to some embodiments of the present disclosure. The configuration of the embodiment shown in the figure is like that of FIG. 1A, except for differences as described further. The configuration of assembly 100 as described herein includes EIC 128 positioned along a center of PIC 104 and further includes a bulk material 114 adjacent to EIC 128, where EIC 128 and the bulk material 114 are surrounded by the optical material 107. In some embodiments, the bulk material 114 may comprise a structurally stiff and thermally conductive base, such as silicon, that may provide mechanical support and stability to the assembly 100. In some embodiments, the bulk material 114 may comprise a wafer cut to suitable proportions to fit on PIC 104 with EIC 128. In some embodiments, the bulk material 114 may be referred to herein as a "dummy die" or a "non-functional die," which refers to a structure that is similar in size and shape to a die but that, unlike a die, does not have active integrated circuitry. The bulk material 114 may have a same thickness (e.g., z-dimension) as EIC 128. The bulk material 114 may include silicon, which is a thermally conductive material to enhance heat dissipation of the assembly 100. The bulk material 114 may not have optical properties. The bulk material 114 may be coupled to the second surface 170-2 of PIC 104 using any suitable technique, such as by fusion bonding (i.e., dielectric-dielectric bonds with no metal-metal bonds at the interface). Although FIG. 3A shows a particular number and arrangement of bulk material 114, an assembly 100 may include any suitable number and arrangement of bulk material 114.

FIG. 3B is a schematic top view of the example assembly of FIG. 3A. As shown in FIG. 3B, EIC 128 may be positioned in towards a middle of PIC 104 with bulk material 114 on either side and the optical material 107 may surround EIC 128 and bulk material 114, such that optical pathways 160 (not shown) may be between EIC 128 and the bulk material 114, as shown in FIG. 3A.

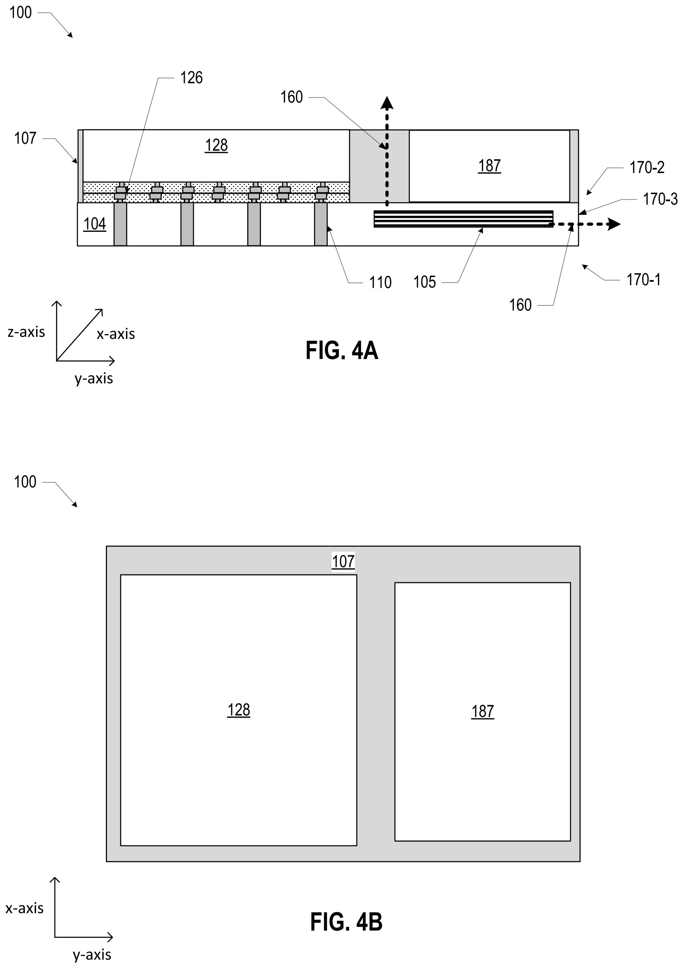

FIG. 4A is a schematic cross-sectional view of another example assembly according to some embodiments of the present disclosure. The configuration of the embodiment shown in the figure is like that of FIG. 2A, except for differences as described further. The configuration of assembly 100 as described herein further includes a photonic device 187 adjacent to EIC 128 (e.g., positioned along a lateral surface 170-3 of PIC 104) and surrounded by an optical material 107. A photonic device 187 may include any suitable photonic device that manipulates optical signals (e.g., light) for various applications. In some embodiments, a photonic device 187 is non-silicon photonic device, such as a laser source, where a material of the non-silicon photonic device includes gallium and arsenic (e.g., in the form of gallium arsenide), indium and phosphorous (e.g., in the form of indium phosphide), or lithium and niobium (e.g., in the form of lithium niobate). The photonic device 187 may be coupled to the second surface 170-2 of PIC 104 using any suitable technique, such as by fusion bonding (i.e., dielectric-dielectric bonds with no metal-metal bonds at the interface).

FIG. 4B is a schematic top view of the example assembly of FIG. 4A. As shown in FIG. 4B, EIC 128 may be positioned in towards an edge or side of PIC 104 and the photonic device 187 may be positioned adjacent to EIC 128 along an opposite edge or side of PIC 104. The optical material 107 may surround EIC 128 and the photonic device 187, such that optical pathways 160 (not shown) may be between EIC 128 and the photonic device 187, as shown in FIG. 4A.

Although FIGS. 1-4 illustrate an optical material 107 surrounding EIC 128 and other components (e.g., bulk material 114 and photonic device 187) on four sides, in some embodiments, EIC 128 and/or the other components may be positioned at an edge of PIC 104 such that the optical material 107 may surround EIC 128 and/or the other components on less than four sides (e.g., three sides or two sides). In some embodiments, multiple assemblies 100 may be manufactured together and subsequently singulated, which may determine whether the optical material 107 completely surrounds EIC 128 and/or the other components. Although FIGS. 1-4 illustrate a particular number and arrangement of EIC 128 and components (e.g., bulk material 114 and photonic device 187), an assembly 100 may have any suitable number and arrangement of EIC 128, bulk material 114, and/or photonic device 187.

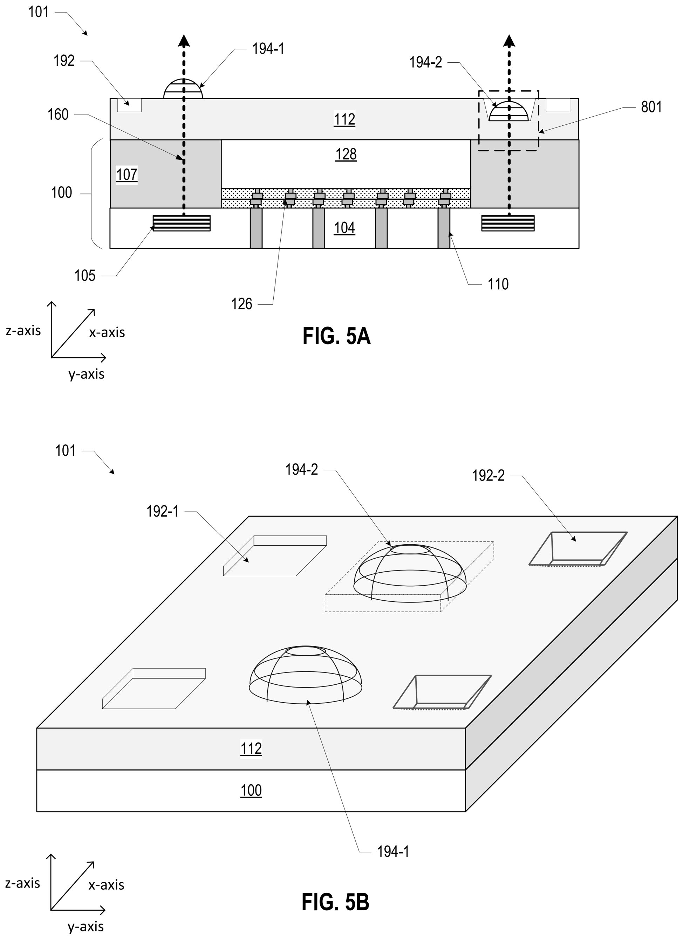

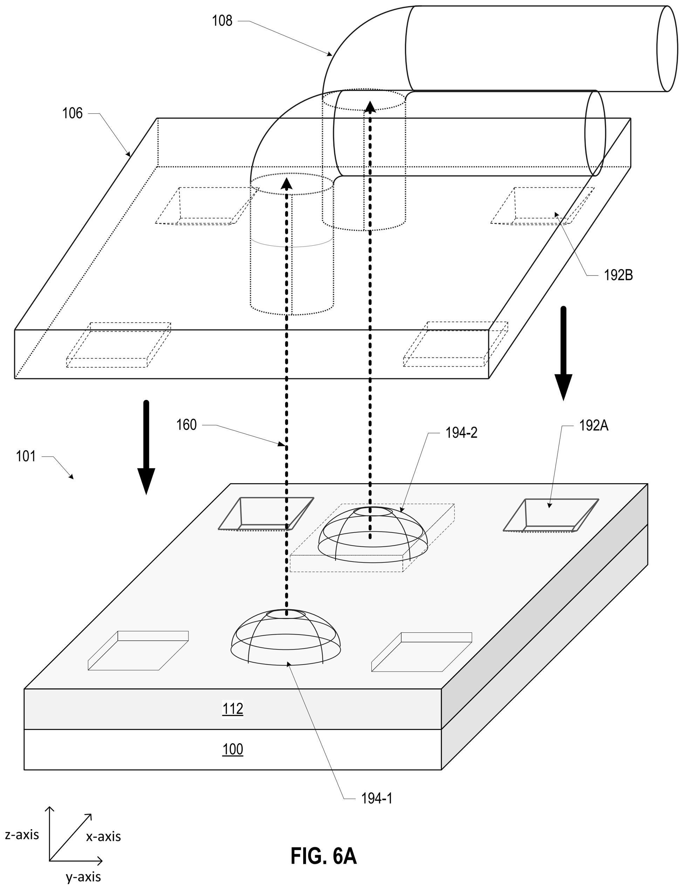

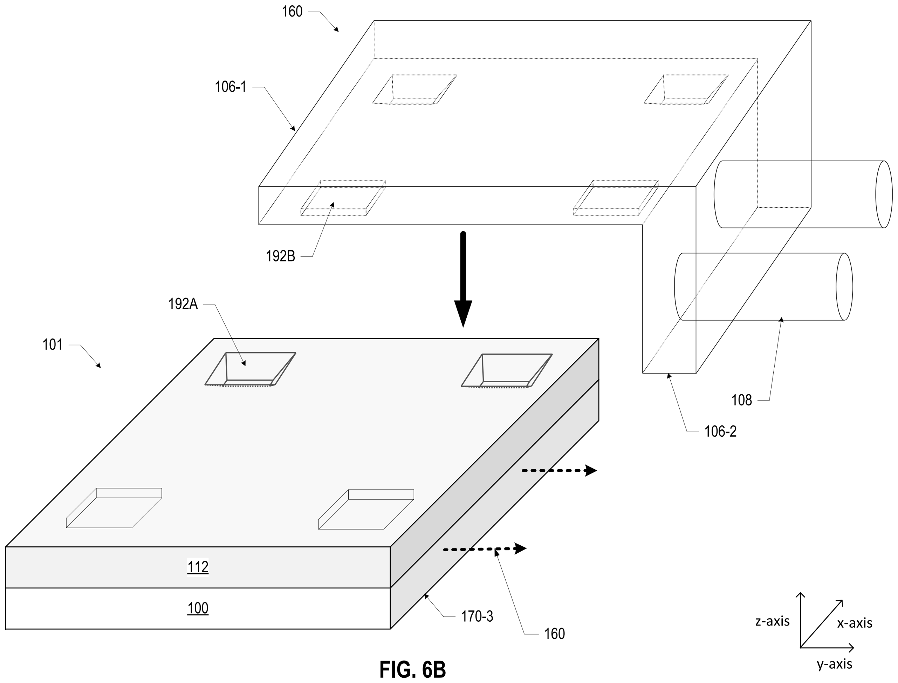

FIG. 5A is a schematic cross-sectional view of an example assembly further including an optical component layer according to some embodiments of the present disclosure. The assembly 101 comprises an assembly 100 (e.g., a PIC 104 having through-substrate vias (TSVs) 110, an EIC 128 on PIC 104 and surrounded by an optical material 107, and an optical pathway 160 extending from an optical element 105 in PIC 104, as shown in FIG. 1A) and an optical component layer 112 coupled to a top surface of the assembly 100 (e.g., on EIC 128 and the optical material 107). An optical component layer 112 may include an alignment feature 192 and an optical component 194 at a top surface. In particular, the optical component layer 112 may include a substrate material, such as silicon, with an alignment feature 192 formed in or on a top surface of the substrate material and an optical component 194, such as a microlens, attached to the top surface of the substrate material (e.g., as shown for optical component 194-1) or attached to a bottom surface of a cavity formed in the top surface of the substrate material (e.g., as shown for optical component 194-2). As described in more detail below with reference to FIG. 5B, alignment feature 192 of optical component layer 112 may include any suitable alignment feature that may form a mated pair with alignment feature 192 of OCS 106 (e.g., alignment feature 192A and 192B, respectively, as shown in FIGS. 6A and 6B), such as a recess and protrusion (e.g., male-female connections) for mechanically aligning assembly 101 and OCS 106. Optical components 194 may include any suitable light transmitting material, such as silicon or glass, and may be attached to the substrate material using any suitable technique, such as optical glue. Optical glue may include any suitable material that permits optical signals to pass through while serving to adhere optical component 194 to the substrate material of the optical component layer 112. The materials may include, by way of examples, and not as limitations, ultraviolet curing optical adhesives, epoxies, silicone, modified silane, and acrylates. Optical component 194 may be optically aligned with optical pathway 160 to/from PIC 104 through the optical material 107 and the substrate material of the optical component layer 112. As described in detail below with reference to FIG. 8, the bonding interface in the portion 801 between the optical material 107 and the substrate material of the optical component layer 112 may be optimized to minimize optical loss across the optical pathway 160.

FIG. 5B is a schematic perspective view of the example assembly of FIG. 5A. As shown in FIG. 5B, the alignment feature 192 may include any suitable alignment feature, for example, a recess or cavity having sidewalls at 90 degrees (e.g., as shown for alignment features 192-1) and/or having sloped sidewalls or sidewall at less than 90 degrees (e.g., 45 degrees similar to a V-groove, as shown for alignment features 192-2), or a protrusion or bump having a particular contour that corresponds to the mated alignment feature. The alignment features 192 may be formed using any suitable technique, such as wet etch or dry etch for a recess, or additive manufacturing for a protrusion. Alignment feature 192 may have any suitable dimensions, for example, alignment feature 192 may have a cross-section dimension (e.g., xy-dimension or surface area) between 50 microns and 500 microns (e.g., between 100 microns and 250 microns) and a height/depth (e.g., z-dimension) between 5 microns and 200 microns (e.g., between 50 microns and 150 microns). Although FIG. 5B illustrates the alignment features 192 having a particular size and shape, alignment features 192 may have any suitable size and shape. Although FIG. 5B illustrates a particular number and arrangement of alignment features 192 (e.g., positioned at corners), an optical component layer 112 may include any suitable number and arrangement of alignment features 192 (e.g., positioned towards a center or arranged in a grid) to assist with aligning an OCS 106, as described below with reference to FIG. 6.

FIG. 6A is a schematic perspective view of an example assembly aligned with an example optical coupling structure according to some embodiments of the present disclosure. As shown in FIG. 6A, an assembly 101 may be aligned to couple with an OCS 106. An OCS 106 may include a medium for transmitting optical signals, such as silicon or glass, having alignment features 192B on a bottom surface and an optical fiber 108 coupled to a top surface. In particular, the alignment features 192B of OCS 106 may be aligned and mated with the alignment features 192A of assembly 101 to optically align optical fibers 108 of OCS 106 with the optical components 194-1, 194-2 of the assembly 101, such that the optical pathways 160 extend vertically to/from PIC 104 (not shown) in assembly 100 through the optical components 194 and the optical fibers 108. Alignment features 192A of assembly 101 may include any suitable alignment features for mating with alignment features 192B of OCS 106 (e.g., having complimentary contours for mating). For example, alignment features 192A may include a recess having a contour and alignment features 192B may include a protrusion having a contour that corresponds to alignment feature 192A, as shown in FIG. 6A. In some embodiments, alignment features 192A may include a protrusion having a contour and alignment features 192B may include a recess having a contour that corresponds to alignment feature 192A. In some embodiments, alignment features 192A and 192B may have a mix of protrusions and recesses that form mated pairs. In some embodiments, OCS 106 may not be physically coupled to the substrate material of the optical component layer 112. In some embodiments, OCS 106 may be physically coupled to the substrate material of the optical component layer 112 using any suitable technique, including a mechanical attachment or optical glue.

FIG. 6B is a schematic perspective view of an example assembly aligned with another example optical connector according to some embodiments of the present disclosure. As shown in FIG. 6B, an assembly 101 may be aligned to couple with an OCS 106. An OCS 106 may include a medium for transmitting optical signals, such as silicon or glass, having a first portion 106-1 that is substantially parallel with a top surface of the assembly 101 and a second portion 106-2 that is substantially perpendicular to the first portion 106-1. Alignment features 192B are on a bottom surface of the first portion 106-1 and an optical fiber 108 is coupled to an outer lateral surface of the second portion 106-2. The alignment features 192B of the first portion 106-1 may be aligned with the alignment features 192A of assembly 101 to optically align optical fibers 108 of the second portion 106-2 with the optical pathways 160 extending horizontally (e.g., through a lateral surface 170-3 of PIC 104 (not shown)) in assembly 100 to the optical fibers 108. OCS 106 (e.g., the first portion 106-1) may be physically coupled to the substrate material of the optical component layer 112 using any suitable technique, including a mechanical attachment or optical glue.

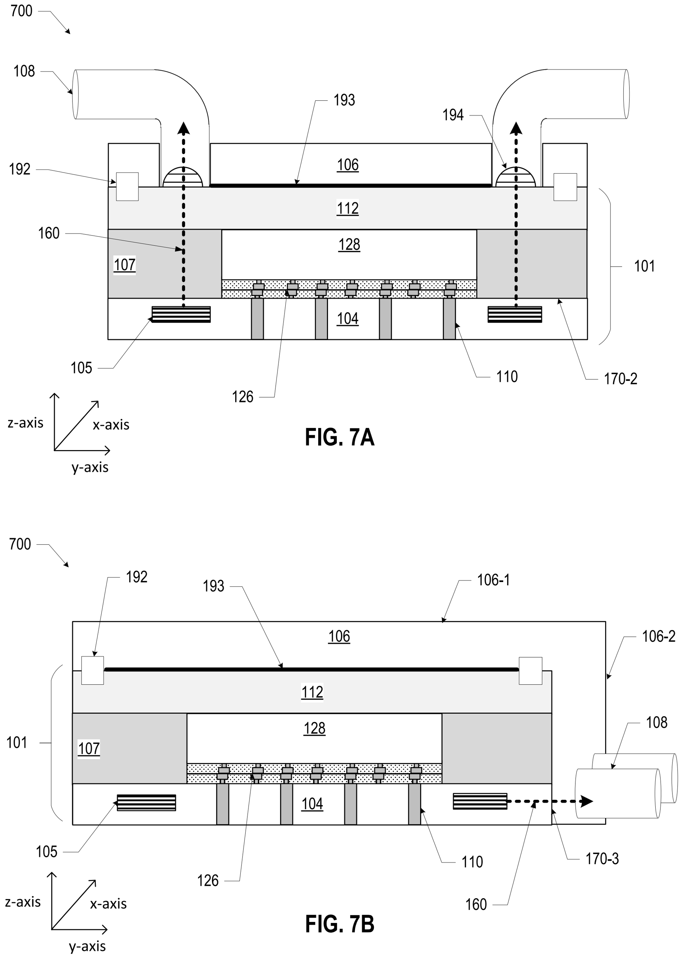

FIG. 7A is a schematic cross-sectional view of an example assembly according to some embodiments of the present disclosure. The assembly 700 comprises an assembly 101 and OCS 106, including an alignment feature 192 and an optical fiber 108 (e.g., as shown in FIG. 6A), on a top surface of the assembly 101 such that the optical fiber 108 is optically aligned with the optical pathway 160 to/from PIC 104 through optical component 194. The OCS 106 may further include a structure or component, such as a ferrule or other similar feature, to attach and align the optical fiber 108. In particular, an assembly 101 may include a PIC 104 having through-substrate vias (TSVs) 110, an EIC 128 on PIC 104 and surrounded by an optical material 107, an optical component layer 112 having an alignment feature 192 and an optical component 194, and an optical pathway 160 extending vertically from an optical element 105 in PIC 104 through the second surface 170-2, the optical material 107, and the substrate material of the optical component layer 112 to the optical component 194 (e.g., similar to the assembly of FIG. 5A). The alignment features 192A, 192B of the optical component layer 112 and OCS 106, respectively, as shown in FIG. 6A, are aligned and mated (e.g., forming a single alignment feature 192). In some embodiments, OCS 106 may be coupled to the substrate material of the optical component layer 112 by an optical glue 193.

FIG. 7B is a schematic cross-sectional view of another example photonic assembly according to some embodiments of the present disclosure. The configuration of the embodiment shown in the figure is like that of FIG. 7A, except for differences as described further. The configuration of assembly 700 as described herein includes an assembly 101 and OCS 106 having a first portion 106-1 and a second portion 106-2 (e.g., as shown in FIG. 6B). The alignment features 192A, 192B of the optical component layer 112 and first portion 106-1 of OCS 106, respectively, as shown in FIG. 6B, are aligned and mated (e.g., forming a single alignment feature 192). The first portion 106-1 may be aligned and coupled with a top surface of the assembly 101 such that the optical fiber 108 of the second portion 106-2 is optically aligned with the optical pathway 160 to/from PIC 104 extending horizontally through a lateral surface 170-3. In some embodiments, the first portion 106-1 of OCS 106 may be coupled to the substrate material of the optical component layer 112 by an optical glue 193.

FIGS. 8A-8E are schematic cross-sectional views of a portion of the example assembly of FIG. 5A. The heterogenous Integration of PIC 104, an optical material 107, and a substrate material of optical component layer 112 may create RI mismatched interfaces as a substrate material of optical component layer 112 (e.g., silicon has an RI of approximately 3.48) has a much higher RI compared to optical material 107 (e.g., silicon oxide has an RI of approximately 1.44). These mismatched interfaces may degrade optical signals and cause optical loss. FIGS. 8A-8E provide solutions for minimizing the RI mismatch between these materials. FIG. 8A illustrates a portion 801 of the assembly of FIG. 5A including PIC 104, an optical material 107, an index matching adhesive layer 137, and a substrate material of optical component layer 112. The index matching material layer 137 may include any suitable material, such as an organic epoxy, that minimizes reflection and refraction at the interface between the optical material 107 and the substrate material of optical component layer 112, allowing light to pass through more efficiently. In some embodiments, an index matching material layer 137 may have an RI between 1.7 and 3.2 (e.g., an RI between 1.3 and 2).

FIG. 8B illustrates a portion 801 of the assembly of FIG. 5A including PIC 104, an optical material 107, an index matching adhesive layer 137, and a substrate material of optical component layer 112. The configuration of the embodiment shown in the figure is like that of FIG. 8A, except that the index matching material layer 137 is positioned below the optical component 194 of the optical component layer 112 along the optical pathway 160 and is surrounded by a material layer 139. The material layer 139 may include any suitable material, such as silicon oxide.

FIG. 8C illustrates a portion 801 of the assembly of FIG. 5A including PIC 104, an optical material 107, an anti-reflection coating 138, and a substrate material of optical component layer 112. The anti-reflection coating 138 may include any suitable material, such as silicon and nitrogen (e.g., in the form of silicon nitride having an RI between 1.61 and 3.0, or a silicon-rich silicon nitride having an RI between 3.0 and 3.22) or silicon, oxygen, and nitrogen (e.g., in the form of silicon oxynitride having an RI between 1.44 and 1.61). In some embodiments, the portion 801 may further include a silicon oxide bonding layer (not shown) between the optical material 107 and the anti-reflection coating 138.

FIG. 8D illustrates a portion 801 of the assembly of FIG. 5A including PIC 104, an optical material 107, an anti-reflection coating 138, and a substrate material of optical component layer 112. The configuration of the embodiment shown in the figure is like that of FIG. 8C, except that the anti-reflection coating 138 is positioned below the optical component 194 of the optical component layer 112 along the optical pathway 160 and is surrounded by a material layer 139. The material layer 139 may include any suitable material, such as silicon oxide.

FIG. 8E illustrates a portion 801 of the assembly of FIG. 5A including PIC 104, an optical material 107, an anti-reflection coating 138, and a substrate material of optical component layer 112. The configuration of the embodiment shown in the figure is like that of FIG. 8C, except that the anti-reflection coating 138 includes multiple layers. In particular, the anti-reflection coating 138 includes a first anti-reflection coating layer 138-1, a second anti-reflection coating layer 138-2, and a third anti-reflection coating layer 138-3 that are stacked to buffer the change in RI mismatching between the optical material 107 and the substrate material of optical component layer 112. In some embodiments, a first anti-reflection coating layer 138-1 may include silicon, oxygen, and nitrogen (e.g., in the form of silicon oxynitride having an RI between 1.44 and 1.61), a second anti-reflection coating layer 138-2 may include silicon and nitrogen (e.g., in the form of silicon nitride having an RI between 1.61 and 3.0), and a third anti-reflection coating layer 138-3 may include a silicon-rich silicon nitride having an RI between 3.0 and 3.22. In some embodiments, the portion 801 may further include a silicon oxide bonding layer (not shown) between the optical material 107 and the first anti-reflection coating layer 138-1.

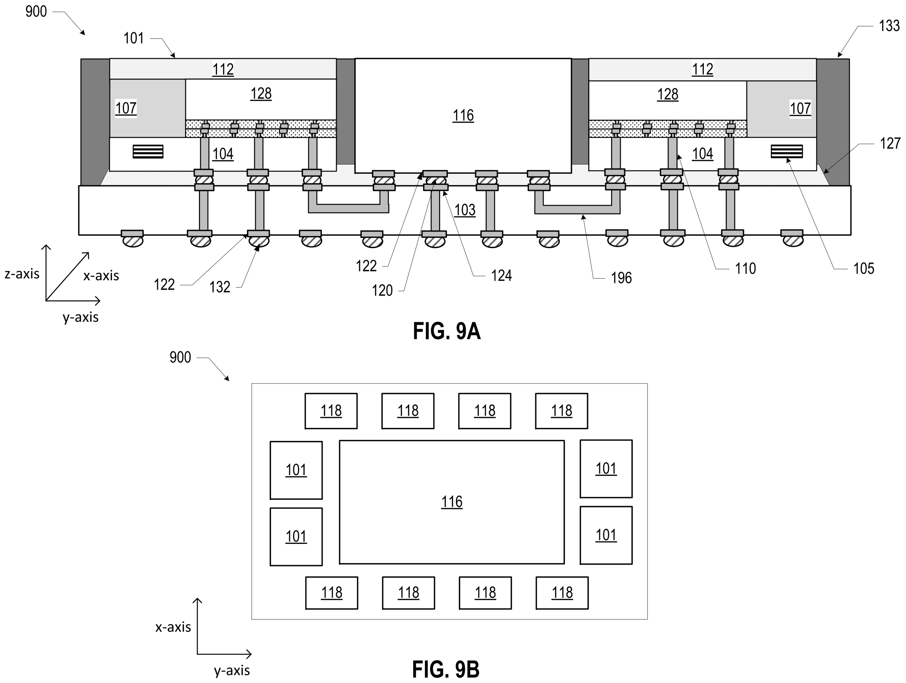

FIG. 9A is a schematic cross-sectional view of an example microelectronic assembly including a photonic assembly according to some embodiments of the present disclosure. Microelectronic assembly 900 may include one or more photonic assemblies 101 and a processor integrated circuit (XPU) 116 electrically coupled to a base die 103. XPU 116 may include processing functionality, such as Central Processing Unit (CPU), Graphics Processing Unit (GPU), Field-Programmable Gate Array (FPGA), ASIC, and accelerator. In various embodiments, XPU 116 may be, or include, one or more voltage converters, Trans Impedance Amplifier (TIA), Clock and Data Recovery (CDR) components, microcontrollers, etc. The photonic assemblies 101 may be pre-assembled prior to electrically coupling to the base die 103. A base die 103 may be referred to as an "interposer," a "wafer," or a "die." The base die 103 may include an insulating material (e.g., one or more dielectric materials formed in multiple layers, as known in the art) and one or more conductive pathways 196 through the insulating material (e.g., including conductive lines, conductive vias, and/or TSVs). In some embodiments, the insulating material of the base die 103 includes an inorganic dielectric material, such as silicon and nitrogen (e.g., in the form of silicon nitride); silicon and oxygen (e.g., in the form of silicon oxide); silicon and carbon (e.g., in the form of silicon carbide); silicon, carbon, and oxygen (e.g., in the form of silicon oxycarbide); silicon, carbon, and nitrogen (e.g., in the form of silicon carbonitride); carbon and oxygen (e.g., in the form of a carbon-doped oxide); silicon, oxygen, and nitrogen (e.g., in the form of silicon oxynitride); or silicon, oxygen, carbon, and hydrogen (e.g., in the form of tetraethyl orthosilicate (TEOS)); and combinations thereof. In some embodiments, the insulating material of the base die 103 includes an insulating metal oxide, such as aluminum and oxygen (e.g., in the form of aluminum oxide); titanium and oxygen (e.g., in the form of titanium oxide); hafnium and oxygen (e.g., in the form of hafnium oxide); zirconium and oxygen (e.g., in the form of zirconium oxide); niobium and oxygen (e.g., in the form of niobium oxide); or tantalum and oxygen (e.g., in the form of tantalum oxide); and combinations thereof. In some embodiments, the base die 103 may be semiconductor-based (e.g., silicon-based) or glass-based. In some embodiments, the base die 103 is a silicon wafer or die. In some embodiments, the base die 103 may be a silicon-on-insulator (SOI) and may further include layers of silicon and germanium (e.g., in the form of silicon germanium), gallium and nitrogen (e.g., in the form of gallium nitride), indium and phosphorous (e.g., in the form of indium phosphide), among others.

The photonic assemblies 101 and XPU 116 may be electrically coupled to the base die 103 interconnects 120. Interconnects 120 may include conductive contacts 122 on bottom surfaces of the assemblies 101 and XPU 116 coupled to conductive contacts 124 on a top surface of the base die 103. In some embodiments, interconnects 120 may include solder, as shown, and an underfill material 127 around the interconnects 120. The underfill material 127 may be an insulating material, such as an appropriate epoxy material. In some embodiments, the underfill material 127 may include a capillary underfill, non-conductive film (NCF), or molded underfill. In some embodiments, the underfill material 127 may include an epoxy flux that assists with soldering when forming the interconnects 120, and then polymerizes and encapsulates the interconnects 120. The underfill process may include dispensing underfill material in liquid form, allowing the material to flow and fill the space between the assemblies 101 and XPU 116 and the base die 103, and the interstitial gaps around interconnects 120, and subjecting the assembly to a curing process, such as baking, to solidify the material. Although FIG. 9A shows a single underfill material 127, in some embodiments, the assemblies 101 and XPU 116 may have a separate underfill material 127. The photonic assemblies 101 may be electrically coupled to XPU 116 by the conductive pathways 196 in the base die 103. The base die 103 may further include conductive contacts 122 on a bottom surface and a solder 132 attached to the conductive contacts 122 for coupling the base die 103 to a package substrate, an interposer, or a circuit board (not shown).

In some embodiments, the photonic assemblies 101 and XPU 116 may be surrounded by an insulating material 133. In some embodiments, the insulating material 133 may include an organic material, such as an epoxy-based material with silica fillers, an epoxy composite material with silicone and silica fillers, a polyimide, or a polybenzoxazole. In some embodiments, the insulating material 133 may include a capillary underfill material, a molded underfill material, a mold material, a resin material, an epoxy material, or other inorganic material.

FIG. 9B is a schematic top view of the example microelectronic assembly of FIG. 9A. As shown in FIG. 9B, a microelectronic assembly 900 may include XPU 116, a plurality of photonic assemblies 101, and a plurality of memory die 118, such as high bandwidth memory (HBM). Although FIG. 9B shows a microelectronic assembly 900 having a particular number and arrangement of components, a microelectronic assembly 900 may have any suitable number and arrangement of photonic assemblies 101, XPUs 116, and memory die 118, and any suitable number and arrangement electrical and optical connections therebetween.

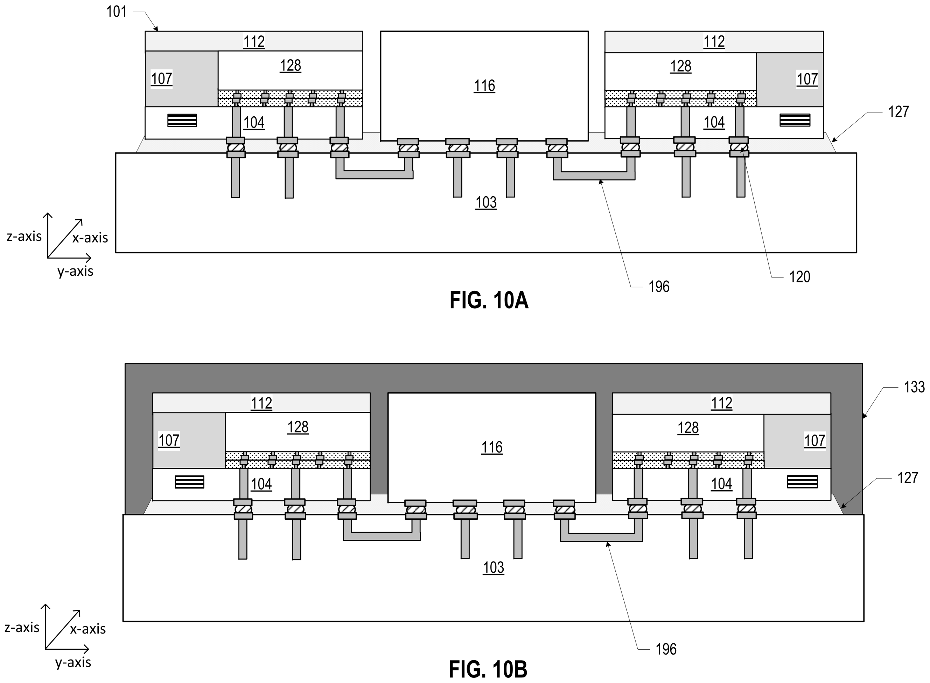

FIGS. 10A-10F are schematic cross-sectional views of different stages of an example process for manufacturing a microelectronic assembly similar to FIG. 9A according to some embodiments of the present disclosure. Although the operations discussed below with reference to FIGS. 10A-10F (and others of the accompanying drawings representing manufacturing processes) are illustrated in a particular order, these operations may be performed in any suitable order. Further, additional operations which are not illustrated may also be performed without departing from the scope of the present disclosure. Also, various ones of the operations discussed herein with respect to FIGS. 10A-10F may be modified in accordance with the present disclosure to fabricate the other assemblies disclosed herein.

FIG. 10A illustrates an assembly including photonic assemblies 101 and XPU 116 electrically coupled to a base die 103 by interconnects 120. Base die 103 may include a wafer with a full thickness. In some embodiments, the interconnects 120 may include solder. In such embodiments, the assembly of FIG. 10A may be subjected to a solder reflow process during which solder components of the interconnects 120 melt and bond to mechanically and electrically couple the assemblies 101 and XPU 116 to the top surface of the base die 103. An underfill material 127 may surround interconnects 120.

FIG. 10B illustrates an assembly subsequent to depositing an insulating material 133 on the top surface of the base die 103, over and around the photonic assemblies 101 and XPU 116. The insulating material 133 may be deposited using any suitable techniques, including, for example, a molding process.

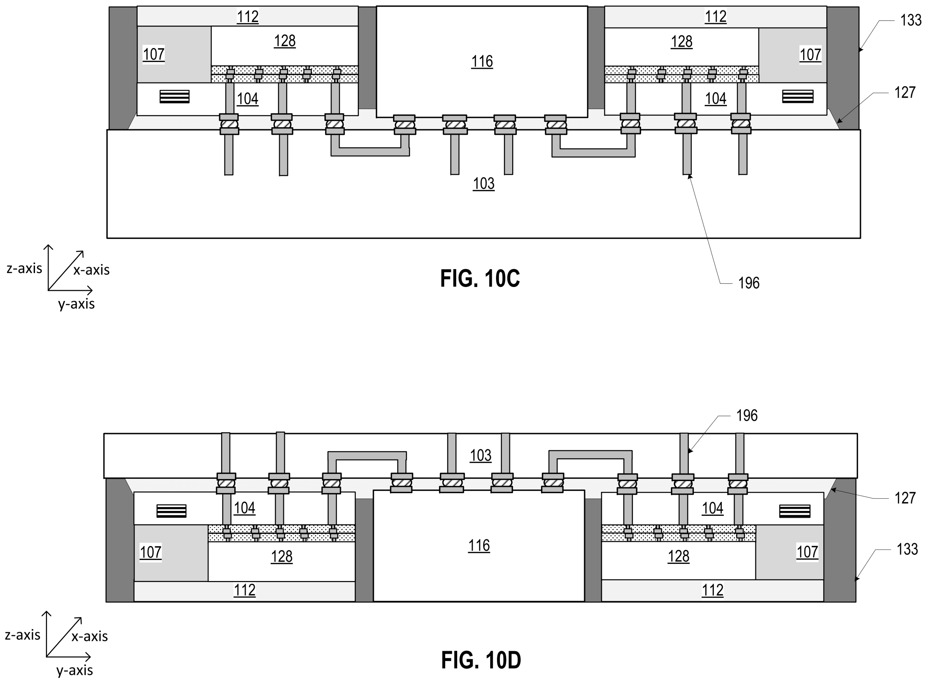

FIG. 10C illustrates an assembly subsequent to planarizing a top surface of the assembly of FIG. 10B and removing excess insulating material 133. The insulating material 133 may be removed using any suitable process, such as grinding or etching, and may be planarized by chemical mechanical polishing (CMP).

FIG. 10D illustrates an assembly subsequent to inverting the assembly of FIG. 10C and thinning the base die 103 to reveal TSVs (e.g., conductive pathways 196) at the surface. The base die 103 may be thinned using any suitable technique, such as grinding or etching.

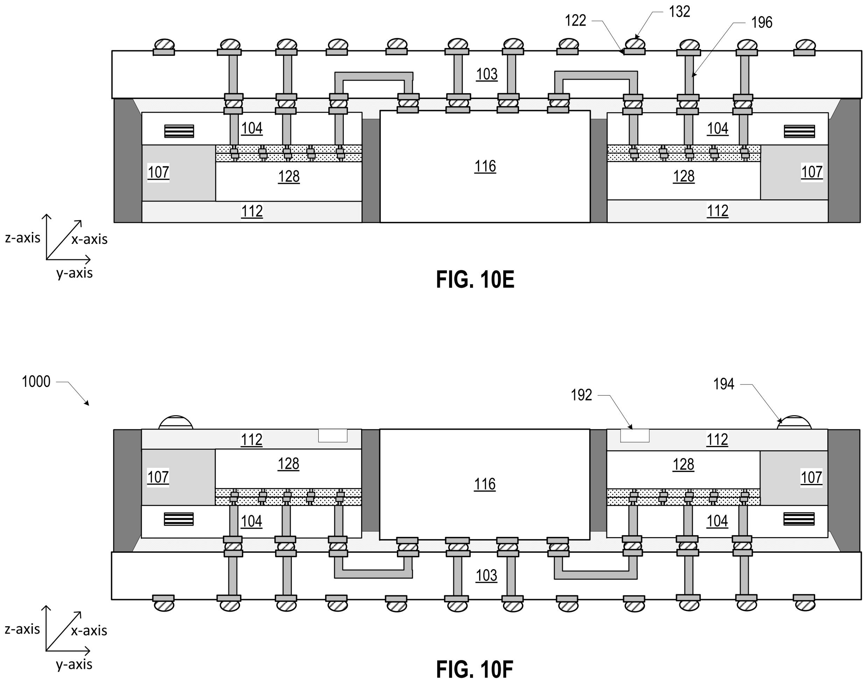

FIG. 10E illustrates an assembly subsequent to performing finishing operations on the surface of the base die 103, such as forming conductive contacts 122, depositing solder resist (not shown), and depositing solder 132.

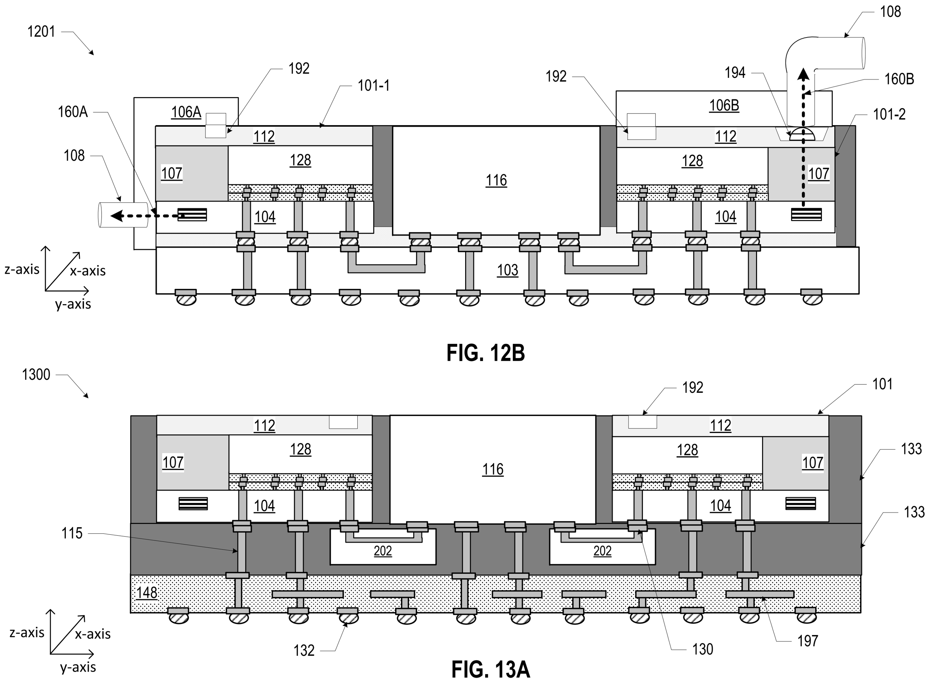

FIG. 10F illustrates an assembly subsequent to inverting the assembly of FIG. 10E, forming alignment features 192 in a substrate material of the optical component layer 112, and attaching optical components 194. The alignment features 192 may be formed using any suitable technique, such as etching, and the optical components 194 may be attached using any suitable technique, such as optical glue. If multiple assemblies are manufactured together, the assemblies may be singulated. The assembly of FIG. 10F may itself be a microelectronic assembly 1000, as shown. Further manufacturing operations may be performed on the microelectronic assembly 1000 of FIG. 10F to form other microelectronic assemblies, for example, attaching OCS 106, as shown in FIG. 12B.

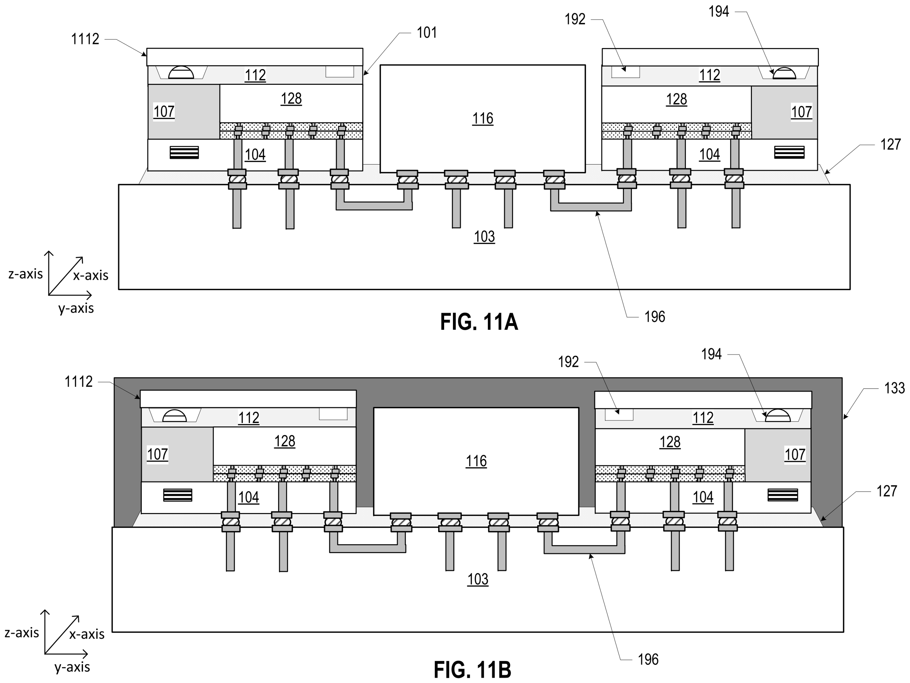

FIGS. 11A-11C are schematic cross-sectional views of different stages of an example process for manufacturing another microelectronic assembly similar to FIG. 9A according to some embodiments of the present disclosure. FIG. 11A illustrates an assembly similar to the assembly of FIG. 10A except that alignment features 192 have been pre-formed and optical components 194 have been pre-attached. FIG. 11A further includes a protective material 1112 covering the alignment features 192 and optical components 194. The protective material 1112 may include any suitable material, such as silicon.

FIG. 11B illustrates an assembly subsequent to depositing an insulating material 133 on the top surface of the base die 103, over and around the photonic assemblies 101 with protective material 1112 and XPU 116. The insulating material 133 may be deposited using any suitable techniques, as described above with reference to FIG. 10B.

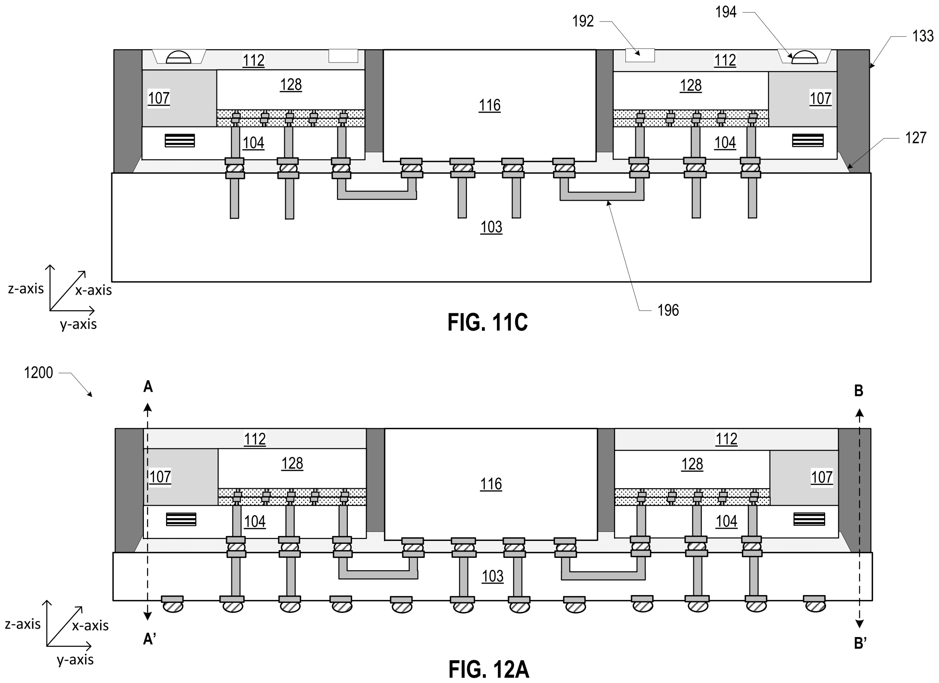

FIG. 11C illustrates an assembly subsequent to planarizing a top surface of the assembly of FIG. 11B and removing excess insulating material 133 and the protective material 1112. The insulating material 133 and the protective material 1112 may be removed using any suitable process, as described above with reference to FIG. 10C. Further operations may be performed on the assembly of FIG. 11C, such as the operations described with reference to FIGS. 10D and 10E to form a microelectronic assembly similar to microelectronic assembly 1000.

FIG. 12A is a schematic cross-sectional view of an example microelectronic assembly including a photonic assembly illustrating singulation lines according to some embodiments of the present disclosure. The configuration of the embodiment shown in the figure is like that of FIG. 9A, except for differences as described further. The configuration of assembly 1200 as described herein includes singulation lines for singulating multiple assemblies that are manufactured together. Singulation line A-A' identifies the singulation area for edge coupling and singulation line B-B' identifies the singulation area for top coupling, as shown in FIG. 12B.

FIG. 12B is a schematic cross-sectional view of an example microelectronic assembly including photonic assemblies and optical connectors according to some embodiments of the present disclosure. The configuration of the embodiment shown in the figure is like that of FIG. 12A, except for differences as described further. The configuration of assembly 1201 as described herein is the assembly 1200 of FIG. 12A subsequent to singulation and further includes an edge coupler OCS 106A attached to a first photonic assembly 101-1 and a top coupler OCS 106B attached to a second photonic assembly 101-2. OCSs 106A, 106B may be optically aligned (e.g., by aligning alignment features 192) with optical pathways 160A, 160B, respectively.

FIG. 13A is a schematic cross-sectional view of another example microelectronic assembly including a photonic assembly according to some embodiments of the present disclosure. Microelectronic assembly 1300 may include a multi-layer die subassembly with a redistribution layer (RDL) 148 in a first layer, bridge dies 202 in a second layer, and photonic assemblies 101 and XPU 116 in a third layer. The photonic assemblies 101 and XPU 116 may be electrically coupled to bridge dies 202 by interconnects 130. Interconnects 130 may include any suitable interconnects, including metal-to-metal interconnects, as shown. A bridge die 202 may comprise appropriate circuitry on/in a semiconductor substrate to connect at silicon-interconnect speeds with a small footprint. In some embodiments, bridge die 202 may comprise active components, such as transistors and diodes in addition to bridge circuitry including metallization traces, vias and passive components for enabling electrical coupling between two ICs; in other embodiments, bridge die 202 may include bridge circuitry including metallization traces, vias and passive components for enabling electrical coupling between photonic assemblies 101 and XPU 116, and may not include active components. The bridge dies 202 in the second layer and the photonic assemblies 101 and XPU 116 in the third layer may be surrounded by an insulating material 133. The insulating material 133 may include any suitable material, as described above with reference to FIG. 9.

The RDL 148 may include conductive pathways 197 (e.g., including conductive traces, pads/contacts, and/or conductive vias, as shown) through a dielectric material. The RDL 148 may be manufactured using any suitable technique, such as a PCB technique or a redistribution layer technique. In some embodiments, a dielectric material of the RDL 148 may include an oxide material, such as silicon and oxygen (e.g., in the form of silicon oxide), a nitride material, silicon and nitrogen (e.g., in the form of silicon nitride), or an organic material. The photonic assemblies 101 and XPU 116 may be electrically coupled to conductive pathways 197 in the RDL 148 by through-mold vias (TMVs) 115 in the second layer. Although FIG. 13A shows a single RDL 148, a microelectronic assembly 1300 may include more than one RDL 148, for example, in some embodiments, a microelectronic assembly 1300 may further include an RDL 148 between the second layer (e.g., bridge dies 202, TMVs 115, and insulating material 133) and the third layer (e.g., photonic assemblies 101 and XPU 116). Although FIG. 13A illustrates a microelectronic assembly 1300 having an insulating material 133 along a side surface of the assembly 101 (e.g., covering an edge of PIC 104), in some embodiments, a microelectronic assembly 1300 may not have an insulating material 133 along a side surface of the assembly 101 such that an edge coupler OCS 106A, as shown in FIG. 12, may be attached.

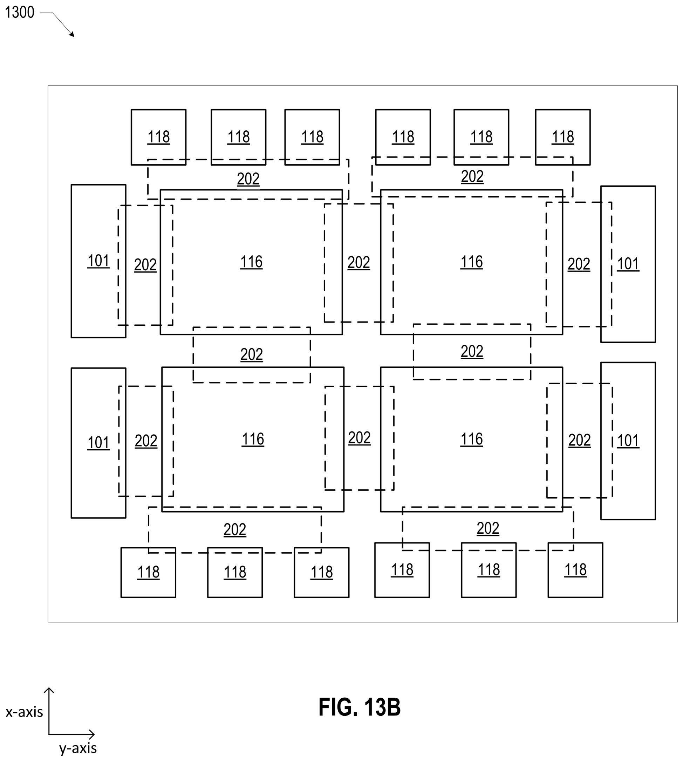

FIG. 13B is a schematic top view of the example microelectronic assembly of FIG. 13A. As shown in FIG. 13B, a microelectronic assembly 1300 may include a plurality of XPU 116, a plurality of photonic assemblies 101, a plurality of memory die 118, such as high bandwidth memory (HBM), and a plurality of bridge die 202. Although FIG. 13B shows a microelectronic assembly 1300 having a particular number and arrangement of components, a microelectronic assembly 1300 may have any suitable number and arrangement of photonic assemblies 101, XPUs 116, memory die 118, and bridge die 202, and any suitable number and arrangement electrical and optical connections therebetween.

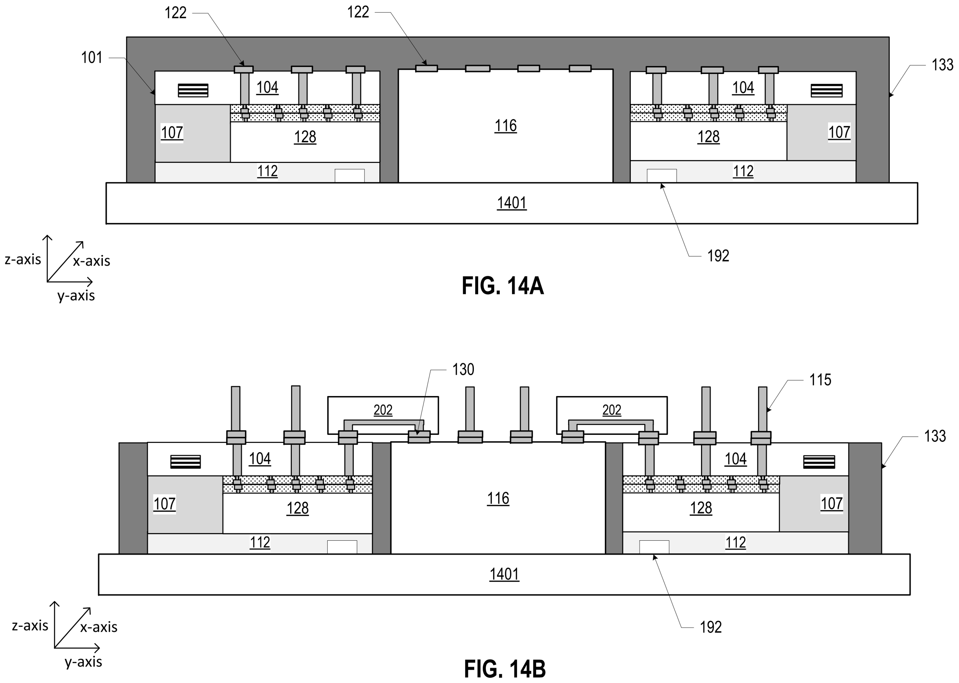

FIGS. 14A-14E are schematic cross-sectional views of different stages of an example process for manufacturing a microelectronic assembly of FIG. 13A according to some embodiments of the present disclosure. FIG. 14A illustrates an assembly subsequent to mounting photonic assemblies 101 and XPU 116 on a carrier 1401 with conductive contacts 122 facing away from the carrier 1401 and depositing an insulating material 133 on and around the photonic assemblies 101 and XPU 116. Any suitable method may be used to place the photonic assemblies 101 and XPU 116 for example, automated pick-and-place. A carrier 1401 may include any suitable material for providing mechanical stability during manufacturing operations, and in some embodiments, may include a semiconductor wafer (e.g., a silicon wafer) or glass (e.g., a glass panel). The insulating material 133 may be deposited using any suitable technique, such as lamination. In some embodiments, photonic assemblies 101 may include pre-formed alignment features 192, as shown.

FIG. 14B illustrates an assembly subsequent to removing the insulating material 133 to expose conductive contacts 122, coupling bridge dies 202 by forming interconnects 130, and depositing conductive material, such as copper, to form TMVs 115. Insulating material 133 may be removed using any suitable technique, such as grinding or etching. Any suitable method may be used to place bridge dies 202, such as pick and place. TMVs 115 may be formed using any suitable technique, for example, a lithographic process or an additive process, such as cold spray or 3-dimensional printing.

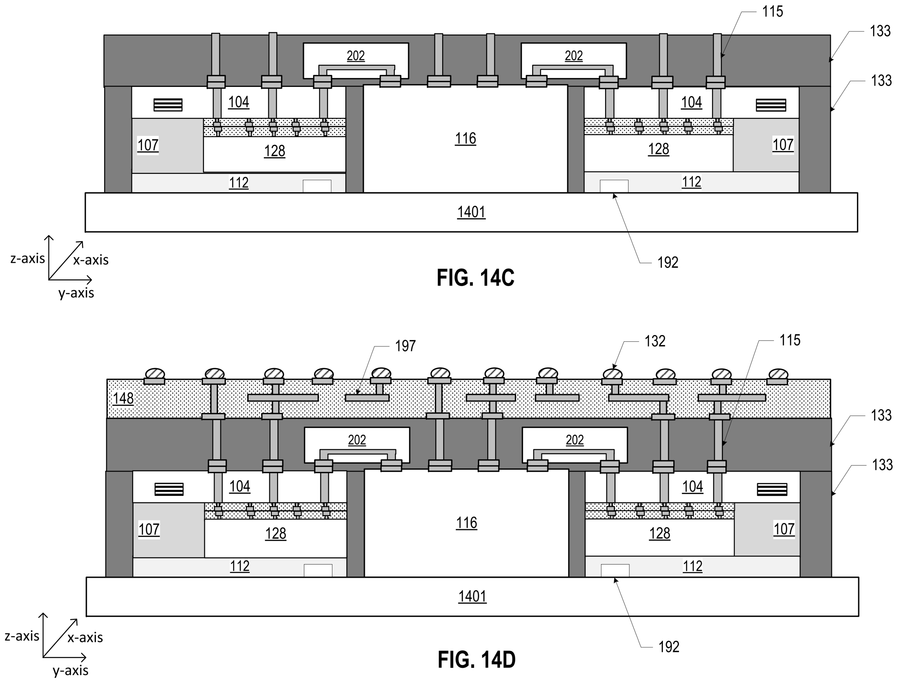

FIG. 14C illustrates an assembly subsequent to depositing an insulating material 133 on and around bridge dies 202 and TMVs 115 and planarizing a top surface to reveal the TMVs 115. The insulating material 133 may be deposited and removed using any suitable technique, as described above with reference to FIGS. 14A and 14B.

FIG. 14D illustrates an assembly subsequent to forming an RDL 148 on a top surface of the assembly of FIG. 14C. The RDL 148 may include conductive pathways 197 through a dielectric material. The RDL 148 may be manufactured using any suitable technique, such as a PCB technique or a redistribution layer technique. Solder 132 may be attached to conductive contacts at the top surface of the assembly of FIG. 14D.

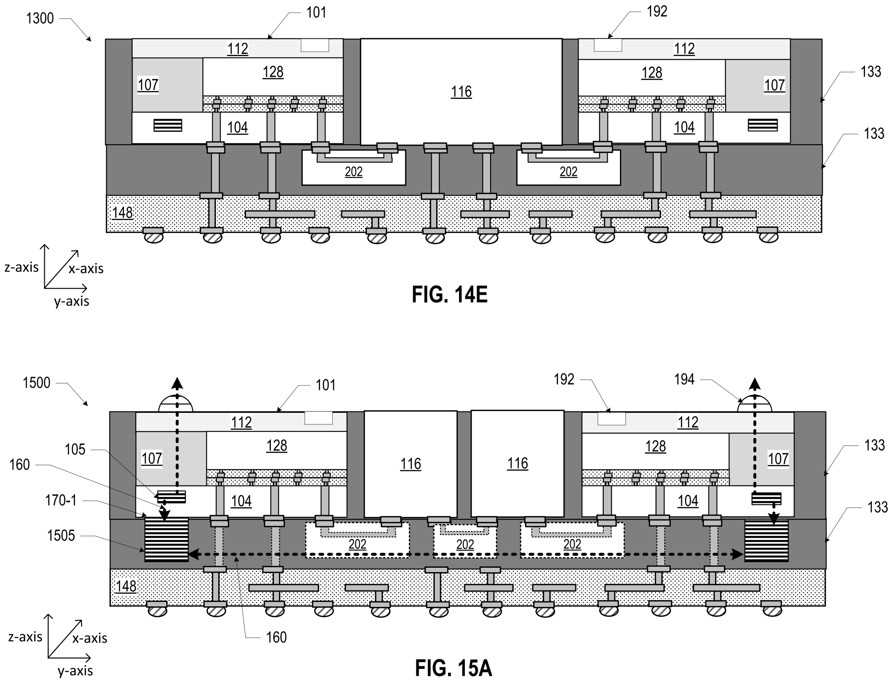

FIG. 14E illustrates an assembly subsequent to removing the carrier 1401 and inverting the assembly of FIG. 14D. The microelectronic assembly 1300 of FIG. 14E may itself be a microelectronic assembly as shown. Further manufacturing operations may be performed on the microelectronic assembly 1300 of FIG. 14E to form other microelectronic assemblies, for example, attaching optical components 194 and/or attaching OCS 106, as shown in FIG. 12B.

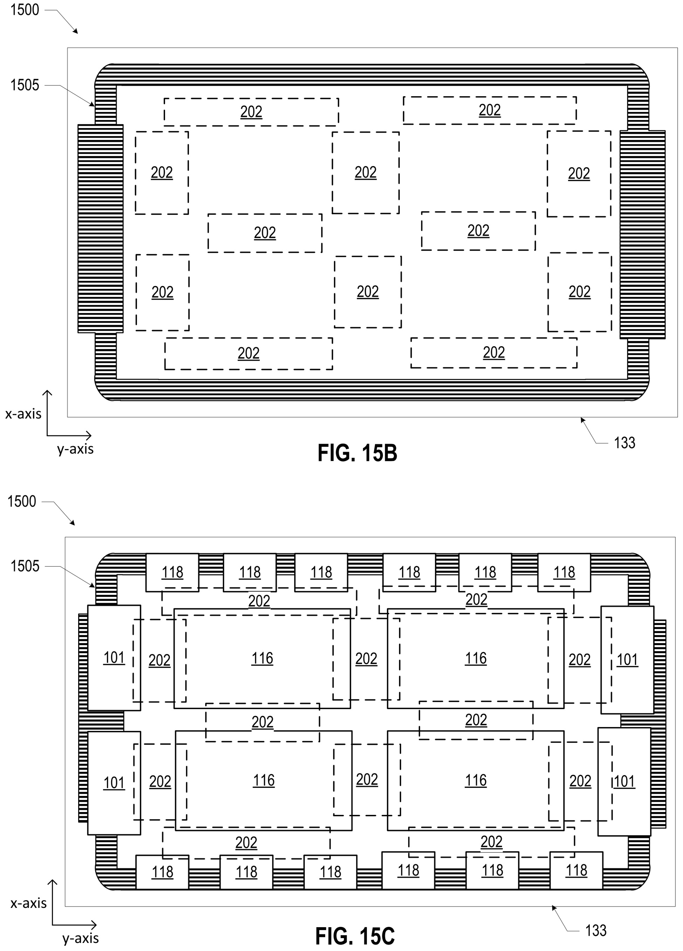

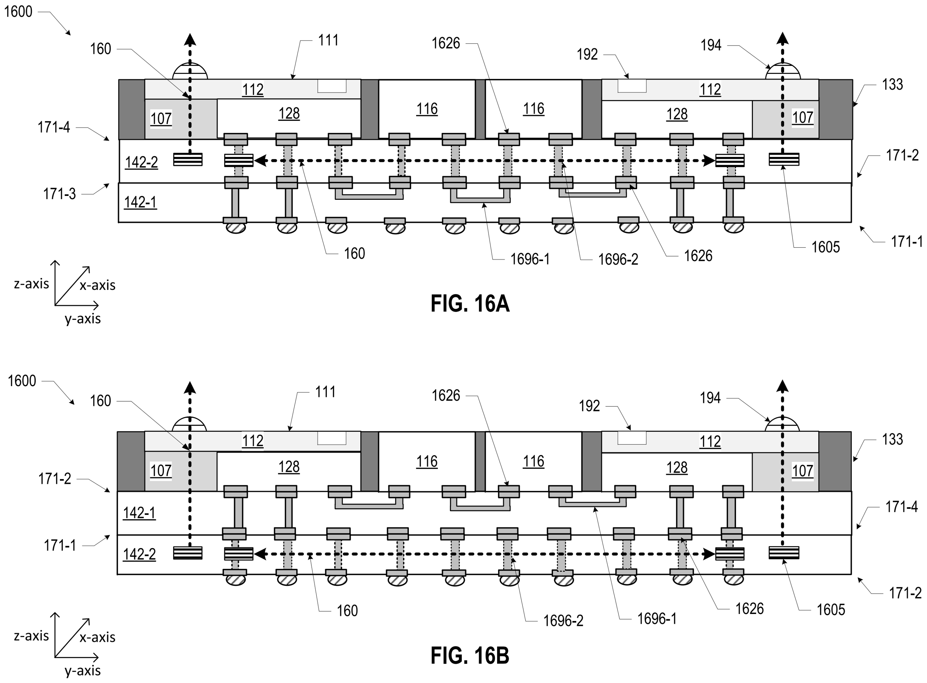

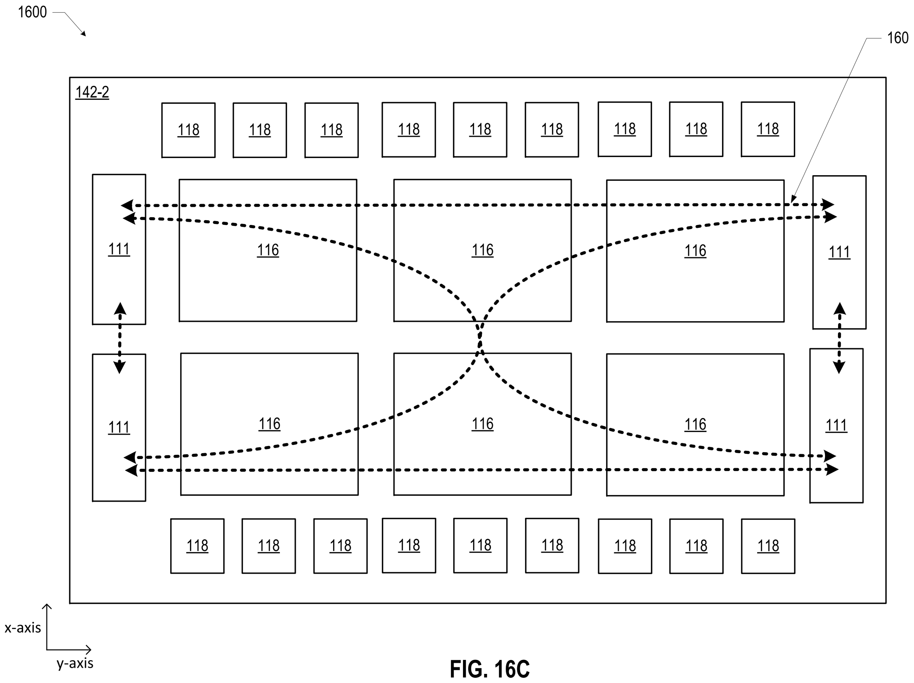

Incorporating optical connections in IC packages having a larger footprint and a greater number of interconnecting components may be beneficial in overcoming limitations associated with electrical connections. FIGS. 15 and 16 illustrate example microelectronic assemblies that incorporate optical intra-package connections.

FIG. 15A is a schematic cross-sectional view of another example microelectronic assembly including a photonic assembly according to some embodiments of the present disclosure. The configuration of the embodiment shown in the figure is like that of FIG. 13A, except for differences as described further. The configuration of assembly 1500 as described herein further includes an optical element 1505 in the second layer forming optical pathways 160 for transmitting optical signals between photonic assemblies 101, and the optical element 105 in PIC 104 of photonic assembly 101 may further include optical pathways 160 extending vertically through the first surface 170-1 (e.g., downward) and connecting with the optical element 1505. FIG. 15A illustrates a microelectronic assembly 1500 having optical routing and electrical routing within a same layer or plane (e.g., within a second layer). As shown in FIG. 15A, the microelectronic assembly 1500 may further include a plurality of XPU 116. The optical element 1505 may include any suitable optical element such as optical fiber or glass with a waveguide. The optical element 1505 may be incorporated when manufacturing the second layer (e.g., aligned with optical pathways 160 to/from PIC 104 and optically attached along with coupling bridge dies 202 and forming TMVs 115, as shown in FIG. 14B) and then subsequent operations as described in FIGS. 14C-14E may be performed to form microelectronic assembly 1500.

FIG. 15B is a schematic top view of the example microelectronic assembly of FIG. 15A showing second layer components. As shown in FIG. 15B, a microelectronic assembly 1500 may include a second layer having a plurality of bridge die 202 and an optical element 1505 surrounded by an insulating material 133. The optical element 1505 may extend along a perimeter of the microelectronic assembly 1500 for transmitting optical signals.

FIG. 15C is schematic top view of the example microelectronic assembly of FIG. 15A showing second layer components and third layer components. As shown in FIG. 15C, a microelectronic assembly 1500 may further include a plurality of XPU 116, a plurality of photonic assemblies 101, and a plurality of memory die 118, such as high bandwidth memory (HBM). The XPUs 116 may be electrically coupled to other XPUs 116 and to the memory die 118 by the plurality of bridge die 202. The photonic assemblies 101 may be electrically coupled to the XPUs 116 by the bridge die 202. The photonic assemblies 101 may be optically coupled to other photonic assemblies 101 by optical pathways 160 (not shown) through optical element 1505. Although FIGS. 15B and 15C show a microelectronic assembly 1500 having a particular number and arrangement of components, a microelectronic assembly 1500 may have any suitable number and arrangement of photonic assemblies 101, optical elements 1505, XPUs 116, memory die 118, and bridge die 202, and any suitable number and arrangement electrical and optical connections therebetween.

FIGS. 16A and 16B are schematic cross-sectional views of another example microelectronic assembly including a photonic interposer according to some embodiments of the present disclosure. FIGS. 16A and 16B illustrate microelectronic assemblies 1600 having optical routing and electrical routing in different layers or planes. As shown in FIG. 16A, a microelectronic assembly 1600 may include a first interposer 142-1 having first conductive pathways 1696-1, a second interposer 142-2 having second conductive pathways 1696-2, optical elements 1605, and optical pathways 160, an assembly 111, and XPU 116. The first interposer 142-1 may include a first surface 171-1 and an opposing second surface 171-2. The second interposer 142-2 may include a third surface 171-3, an opposing fourth surface 171-4, and an optical element 1605 forming optical pathways 160 for transmitting optical signals through the second interposer 142-2. The third surface 171-3 of the second interposer 142-2 may be electrically coupled to the second surface 171-2 of the first interposer 142-1 by interconnects 1626. Interconnects 1626 may include any suitable interconnects such as hybrid bonds (e.g., interconnects 126 in FIG. 1A) or metal-to-metal interconnects. Assembly 111 is similar to assembly 101 except that PIC 104 is omitted (e.g., optical elements 105, as shown in FIG. 5A, are incorporated in the second interposer 142-2 as optical elements 1605). Optical pathways 160 from optical elements 1605 in the second interposer 142-2 extend vertically, through the fourth surface 171-4 of the second interposer 142-2, and are optically aligned with the optical components 194 in the assembly 111. The second interposer 142-2 may include a material having optical properties for transmitting optical signals, such as silicon oxide or glass. Assembly 111 and XPU 116 may be electrically coupled to the fourth surface of the second interposer 142-2 by interconnects 1626. Assembly 111 and XPU 116 may be electrically coupled by interconnects 1626 and by first and second conductive pathways 1696-1, 1696-2. In some embodiments, assembly 111 and XPU 116 may be surrounded by an insulating material 133.

FIG. 16B is a schematic cross-sectional view of another example microelectronic assembly including a photonic interposer according to some embodiments of the present disclosure. The configuration of the embodiment shown in the figure is like that of FIG. 16A, except for differences as described further. The configuration of assembly 1600 as described herein, the positions of the first interposer 142-1 and the second interposer 142-2 are swapped. As shown in FIG. 16B, the second interposer 142-2 is at a bottom of the microelectronic assembly 1600, such that the first surface 171-1 of the first interposer 141-1 is electrically coupled to the fourth surface 171-4 of the second interposer 142-2. Optical pathways 160 from optical elements 1605 in the second interposer 142-2 extend vertically, through the fourth surface 171-4 of the second interposer 142-2 and through the first interposer 142-1, and are optically aligned with the optical components 194 in the assembly 111. The first interposer 142-1 may include a material having optical properties for transmitting optical signals, such as silicon oxide or glass.

FIG. 16C is a schematic top view of the example microelectronic assemblies of FIGS. 16A and 16B illustrating optical pathways according to some embodiments of the present disclosure. As shown in FIG. 16C, a microelectronic assembly 1600 may include a second interposer 142-2 with optical pathways 160, a plurality of assemblies 111, a plurality of XPU, and a plurality of memory die 118 (e.g., HBM). The assemblies 111 may be optically connected to other assemblies 111 by optical pathways 160 through the second interposer 142-2. Although FIG. 16C shows a microelectronic assembly 1600 having a particular number and arrangement of components, a microelectronic assembly 1600 may have any suitable number and arrangement of first interposers 142-1, second interposers 142-2 and optical elements 1505, assemblies 111, XPUs 116, and memory die 118, and any suitable number and arrangement electrical and optical connections therebetween.

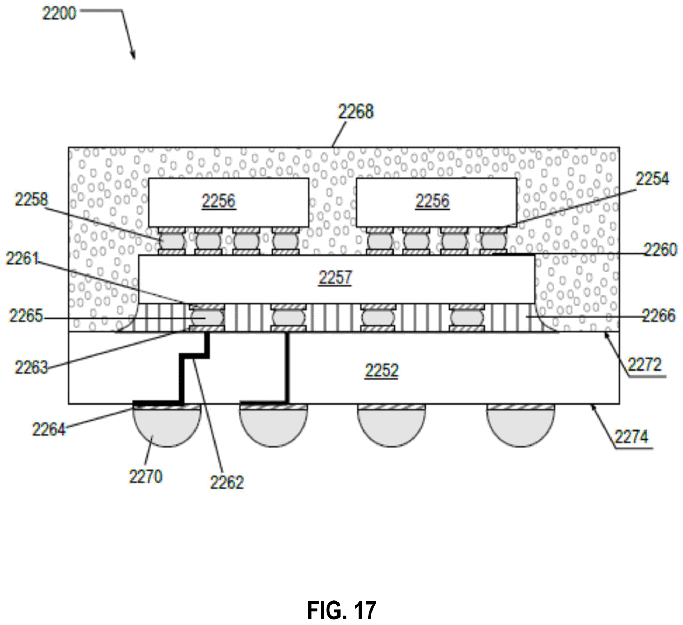

The packages disclosed herein, e.g., any of the assemblies 100, 101, 111, any of microelectronic assemblies 900, 1000, 1200, 1201, 1300, 1500, 1600, or any further embodiments described herein, may be included in any suitable electronic component. FIGS. 17-20 illustrate various examples of packages, assemblies, and devices that may be used with or include any of the IC packages as disclosed herein.

FIG. 17 is a side, cross-sectional view of an example IC package 2200 that may include IC packages in accordance with any of the embodiments disclosed herein. In some embodiments, the IC package 2200 may be a SiP.

As shown in the figure, package substrate 2252 may be formed of an insulator (e.g., a ceramic, a buildup film, an epoxy film having filler particles therein, etc.), and may have conductive pathways extending through the insulator between first face 2272 and second face 2274, or between different locations on first face 2272, and/or between different locations on second face 2274. These conductive pathways may take the form of any of the interconnect structures comprising lines and/or vias.

Package substrate 2252 may include conductive contacts 2263 that are coupled to conductive pathway 2262 through package substrate 2252, allowing circuitry within dies 2256 and/or interposer 2257 to electrically couple to various ones of conductive contacts 2264 (or to other devices included in package substrate 2252, not shown).

IC package 2200 may include interposer 2257 coupled to package substrate 2252 via conductive contacts 2261 of interposer 2257, first-level interconnects 2265, and conductive contacts 2263 of package substrate 2252. First-level interconnects 2265 illustrated in the figure are solder bumps, but any suitable first-level interconnects 2265 may be used, such as solder bumps, solder posts, or bond wires.

IC package 2200 may include one or more dies 2256 coupled to interposer 2257 via conductive contacts 2254 of dies 2256, first-level interconnects 2258, and conductive contacts 2260 of interposer 2257. Conductive contacts 2260 may be coupled to conductive pathways (not shown) through interposer 2257, allowing circuitry within dies 2256 to electrically couple to various ones of conductive contacts 2261 (or to other devices included in interposer 2257, not shown). First-level interconnects 2258 illustrated in the figure are solder bumps, but any suitable first-level interconnects 2258 may be used, such as solder bumps, solder posts, or bond wires. As used herein, a "conductive contact" may refer to a portion of electrically conductive material (e.g., metal) serving as an interface between different components; conductive contacts may be recessed in, flush with, or extending away from a surface of a component, and may take any suitable form (e.g., a conductive pad or socket).

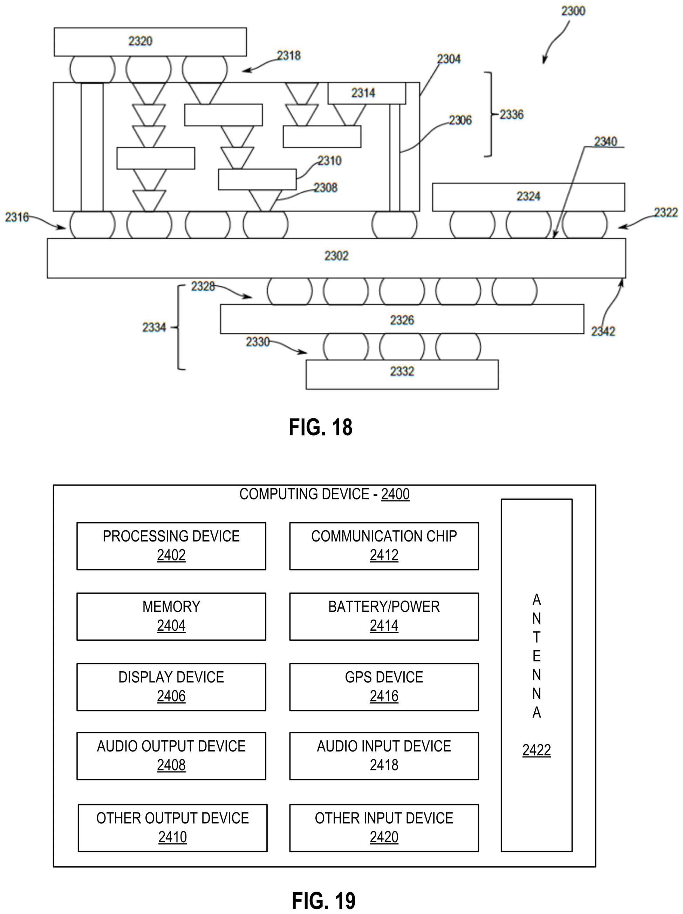

In some embodiments, underfill material 2266 may be disposed between package substrate 2252 and interposer 2257 around first-level interconnects 2265, and mold 2268 may be disposed around dies 2256 and interposer 2257 and in contact with package substrate 2252. In some embodiments, underfill material 2266 may be the same as mold 2268. Example materials that may be used for underfill material 2266 and mold 2268 are epoxies as suitable. Second-level interconnects 2270 may be coupled to conductive contacts 2264. Second-level interconnects 2270 illustrated in the figure are solder balls (e.g., for a ball grid array (BGA) arrangement), but any suitable second-level interconnects 2270 may be used (e.g., pins in a pin grid array arrangement or lands in a land grid array arrangement). Second-level interconnects 2270 may be used to couple IC package 2200 to another component, such as a circuit board (e.g., a motherboard), an interposer, or another IC package, as known in the art and as discussed below with reference to FIG. 18.

In embodiments in which IC package 2200 includes multiple dies 2256, IC package 2200 may be referred to as a multi-chip package (MCP). Dies 2256 may include circuitry to perform any desired functionality. For example, one or more of dies 2256 may be logic dies (e.g., silicon-based dies), one or more of dies 2256 may be memory dies (e.g., HBM), etc. In some embodiments, any of dies 2256 may be implemented as discussed with reference to any of the previous figures. In some embodiments, at least some of dies 2256 may not include implementations as described herein.

Although IC package 2200 illustrated in the figure is a flip-chip package, other package architectures may be used. For example, IC package 2200 may be a BGA package, such as an embedded wafer-level ball grid array (eWLB) package. In another example, IC package 2200 may be a wafer-level chip scale package (WLCSP) or a panel fan-out (FO) package. Although two dies 2256 are illustrated in IC package 2200, IC package 2200 may include any desired number of dies 2256. IC package 2200 may include additional passive components, such as surface-mount resistors, capacitors, and inductors disposed over first face 2272 or second face 2274 of package substrate 2252, or on either face of interposer 2257. More generally, IC package 2200 may include any other active or passive components known in the art.

In some embodiments, no interposer 2257 may be included in IC package 2200; instead, dies 2256 may be coupled directly to conductive contacts 2263 at first face 2272 by first-level interconnects 2265.

FIG. 18 is a cross-sectional side view of an IC device assembly 2300 that may include components, in accordance with any of the embodiments disclosed herein. IC device assembly 2300 includes a number of components disposed over a circuit board 2302 (which may be, e.g., a motherboard). IC device assembly 2300 includes components disposed over a first face 2340 of circuit board 2302 and an opposing second face 2342 of circuit board 2302; generally, components may be disposed over one or both faces 2340 and 2342. In particular, any suitable ones of the components of IC device assembly 2300 may include any of the one or more assemblies, in accordance with any of the embodiments disclosed herein; e.g., any of the IC packages discussed below with reference to IC device assembly 2300 may take the form of any of the embodiments of IC package 2200 discussed above with reference to FIG. 17.

In some embodiments, circuit board 2302 may be a PCB including multiple metal layers separated from one another by layers of insulator and interconnected by electrically conductive vias. Any one or more of the metal layers may be formed in a desired circuit pattern to route electrical signals (optionally in conjunction with other metal layers) between the components coupled to circuit board 2302. In other embodiments, circuit board 2302 may be a non-PCB package substrate.

As illustrated in the figure, in some embodiments, IC device assembly 2300 may include a package-on-interposer structure 2336 coupled to first face 2340 of circuit board 2302 by coupling components 2316. Coupling components 2316 may electrically and mechanically couple package-on-interposer structure 2336 to circuit board 2302, and may include solder balls (as shown), male and female portions of a socket, an adhesive, an underfill material, and/or any other suitable electrical and/or mechanical coupling structure.

Package-on-interposer structure 2336 may include IC package 2320 coupled to interposer 2304 by coupling components 2318. Coupling components 2318 may take any suitable form depending on desired functionalities, such as the forms discussed above with reference to coupling components 2316. In some embodiments, IC package 2320 may be or include IC package 2200, e.g., as described above with reference to FIG. 17. In some embodiments, IC package 2320 may include one or more of the assemblies as described herein.

Although a single IC package 2320 is shown in the figure, multiple IC packages may be coupled to interposer 2304; indeed, additional interposers may be coupled to interposer 2304. Interposer 2304 may provide an intervening package substrate used to bridge circuit board 2302 and IC package 2320. Generally, interposer 2304 may redistribute a connection to a wider pitch or reroute a connection to a different connection. For example, interposer 2304 may couple IC package 2320 to a BGA of coupling components 2316 for coupling to circuit board 2302.

In the embodiment illustrated in the figure, IC package 2320 and circuit board 2302 are attached to opposing sides of interposer 2304. In other embodiments, IC package 2320 and circuit board 2302 may be attached to a same side of interposer 2304. In some embodiments, three or more components may be interconnected by way of interposer 2304.

Interposer 2304 may be formed of an epoxy resin, a fiberglass-reinforced epoxy resin, a ceramic material, or a polymer material such as polyimide. In some implementations, interposer 2304 may be formed of alternate rigid or flexible materials that may include the same materials described above for use in a semiconductor substrate, such as silicon, germanium, and other group III-V and group IV materials. Interposer 2304 may include metal interconnects 2308 and vias 2310, including but not limited to TSVs 2306. Interposer 2304 may further include embedded devices 2314, including both passive and active devices. Such devices may include, but are not limited to, capacitors, decoupling capacitors, resistors, inductors, fuses, diodes, transformers, sensors, ESD devices, and memory devices. More complex devices such as radio frequency (RF) devices, power amplifiers, power management devices, antennas, arrays, sensors, and microelectromechanical systems (MEMS) devices may also be formed on interposer 2304. Package-on-interposer structure 2336 may take the form of any of the package-on-interposer structures known in the art.

In some embodiments, IC device assembly 2300 may include an IC package 2324 coupled to first face 2340 of circuit board 2302 by coupling components 2322. Coupling components 2322 may take the form of any of the embodiments discussed above with reference to coupling components 2316, and IC package 2324 may take the form of any of the embodiments discussed above with reference to IC package 2320.

In some embodiments, IC device assembly 2300 may include a package-on-package structure 2334 coupled to second face 2342 of circuit board 2302 by coupling components 2328. Package-on-package structure 2334 may include an IC package 2326 and an IC package 2332 coupled together by coupling components 2330 such that IC package 2326 is disposed between circuit board 2302 and IC package 2332. Coupling components 2328 and 2330 may take the form of any of the embodiments of coupling components 2316 discussed above, and IC packages 2326 and/or 2332 may take the form of any of the embodiments of IC package 2320 discussed above. Package-on-package structure 2334 may be configured in accordance with any of the package-on-package structures known in the art.

FIG. 19 is a block diagram of an example computing device 2400 that may include one or more components having one or more IC packages in accordance with any of the embodiments disclosed herein. For example, any suitable ones of the components of computing device 2400 may include an assembly in accordance with any of the embodiments disclosed herein. In another example, any one or more of the components of computing device 2400 may include any embodiments of IC package 2200 (e.g., as shown in FIG. 17). In yet another example, any one or more of the components of computing device 2400 may include an IC device assembly 2300 (e.g., as shown in FIG. 18).

A number of components are illustrated in the figure as included in computing device 2400, but any one or more of these components may be omitted or duplicated, as suitable for the application. In some embodiments, some or all of the components included in computing device 2400 may be attached to one or more motherboards. In some embodiments, some or all of these components are fabricated onto a single SoC die.

Additionally, in various embodiments, computing device 2400 may not include one or more of the components illustrated in the figure, but computing device 2400 may include interface circuitry for coupling to the one or more components. For example, computing device 2400 may not include a display device 2406, but may include display device interface circuitry (e.g., a connector and driver circuitry) to which display device 2406 may be coupled. In another set of examples, computing device 2400 may not include an audio input device 2418 or an audio output device 2408, but may include audio input or output device interface circuitry (e.g., connectors and supporting circuitry) to which audio input device 2418 or audio output device 2408 may be coupled.

Computing device 2400 may include a processing device 2402 (e.g., one or more processing devices). As used herein, the term "processing device" or "processor" may refer to any device or portion of a device that processes electronic data from registers and/or memory to transform that electronic data into other electronic data that may be stored in registers and/or memory. Processing device 2402 may include one or more DSPs, ASICs, CPUs, GPUs, cryptoprocessors (specialized processors that execute cryptographic algorithms within hardware), server processors, or any other suitable processing devices. Computing device 2400 may include a memory 2404, which may itself include one or more memory devices such as volatile memory (e.g., dynamic random access memory (DRAM)), nonvolatile memory (e.g., read-only memory (ROM)), flash memory, solid-state memory, and/or a hard drive. In some embodiments, memory 2404 may include memory that shares a die with processing device 2402. This memory may be used as cache memory and may include embedded dynamic random access memory (eDRAM) or spin transfer torque magnetic random access memory (STT-MRAM).

In some embodiments, computing device 2400 may include a communication chip 2412 (e.g., one or more communication chips). For example, communication chip 2412 may be configured for managing wireless communications for the transfer of data to and from computing device 2400. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not.

Communication chip 2412 may implement any of a number of wireless standards or protocols, including but not limited to Institute for Electrical and Electronic Engineers (IEEE) standards including Wi-Fi (IEEE 802.11 family), IEEE 802.16 standards (e.g., IEEE 802.16-2005 Amendment), LTE project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for Worldwide Interoperability for Microwave Access, which is a certification mark for products that pass conformity and interoperability tests for the IEEE 802.16 standards. The communication chip 2412 may operate in accordance with a Global System for Mobile Communication (GSM), General Packet Radio Service (GPRS), Universal Mobile Telecommunications System (UMTS), High-Speed Packet Access (HSPA), Evolved HSPA (E-HSPA), or LTE network. The communication chip 2412 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). Communication chip 2412 may operate in accordance with Code Division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. Communication chip 2412 may operate in accordance with other wireless protocols in other embodiments. Computing device 2400 may include an antenna 2422 to facilitate wireless communications and/or to receive other wireless communications (such as AM or FM radio transmissions).

In some embodiments, communication chip 2412 may manage wired communications, such as electrical, optical, or any other suitable communication protocols (e.g., the Ethernet). As noted above, communication chip 2412 may include multiple communication chips. For instance, a first communication chip 2412 may be dedicated to shorter-range wireless communications such as Wi-Fi or Bluetooth, and a second communication chip 2412 may be dedicated to longer-range wireless communications such as global positioning system (GPS), EDGE, GPRS, CDMA, WiMAX, LTE, EV-DO, or others. In some embodiments, a first communication chip 2412 may be dedicated to wireless communications, and a second communication chip 2412 may be dedicated to wired communications.

Computing device 2400 may include battery/power circuitry 2414. Battery/power circuitry 2414 may include one or more energy storage devices (e.g., batteries or capacitors) and/or circuitry for coupling components of computing device 2400 to an energy source separate from computing device 2400 (e.g., AC line power).

Computing device 2400 may include a display device 2406 (or corresponding interface circuitry, as discussed above). Display device 2406 may include any visual indicators, such as a heads-up display, a computer monitor, a projector, a touchscreen display, a liquid crystal display (LCD), a light-emitting diode display, or a flat panel display, for example.

Computing device 2400 may include audio output device 2408 (or corresponding interface circuitry, as discussed above). Audio output device 2408 may include any device that generates an audible indicator, such as speakers, headsets, or earbuds, for example.

Computing device 2400 may include audio input device 2418 (or corresponding interface circuitry, as discussed above). Audio input device 2418 may include any device that generates a signal representative of a sound, such as microphones, microphone arrays, or digital instruments (e.g., instruments having a musical instrument digital interface (MIDI) output).

Computing device 2400 may include a GPS device 2416 (or corresponding interface circuitry, as discussed above). GPS device 2416 may be in communication with a satellite-based system and may receive a location of computing device 2400, as known in the art.

Computing device 2400 may include other output device 2410 (or corresponding interface circuitry, as discussed above). Examples of other output device 2410 may include an audio codec, a video codec, a printer, a wired or wireless transmitter for providing information to other devices, or an additional storage device.

Computing device 2400 may include other input device 2420 (or corresponding interface circuitry, as discussed above). Examples of other input device 2420 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

Computing device 2400 may have any desired form factor, such as a handheld or mobile computing device (e.g., a cell phone, a smart phone, a mobile internet device, a music player, a tablet computer, a laptop computer, a netbook computer, an ultrabook computer, a personal digital assistant (PDA), an ultramobile personal computer, etc.), a desktop computing device, a server or other networked computing component, a printer, a scanner, a monitor, a set-top box, an entertainment control unit, a vehicle control unit, a digital camera, a digital video recorder, or a wearable computing device. In some embodiments, computing device 2400 may be any other electronic device that processes data.

FIG. 20 is a block diagram of an example photonic device 2500 that may include one or more components in which the optical couplers as disclosed herein may be implemented. For example, any suitable ones of the components of the photonic device 2500 may include a die having one or more microelectronic packages (e.g., microelectronic packages 2200 of FIG. 17).

A number of components are illustrated in FIG. 20 as included in the photonic device 2500, but any one or more of these components may be omitted or duplicated, as suitable for the application. In some embodiments, some or all of the components included in the photonic device 2500 may be attached to one or more motherboards or any suitable support structure. In some embodiments, some or all of these components are fabricated onto a single system-on-chip (SoC) die. Additionally, in various embodiments, the photonic device 2500 may not include one or more of the components illustrated in FIG. 20, but the photonic device 2500 may include interface circuitry for coupling to the one or more components. For example, the photonic device 2500 may not include a processing device 2522, but may include processing device interface circuitry (e.g., a connector and driver circuitry) to which a processing device 2522 may be coupled. In another example, the photonic device 2500 may not include a memory 2524, but may include memory interface circuitry (e.g., connectors and supporting circuitry) to which a memory 2524 may be coupled. In yet another example, the photonic device 2500 may not include a circulator 2518, but may include circulator interface circuitry (e.g., connectors) to which a circulator 2518 may be coupled

In some embodiments, the photonic device 2500 may include at least one light source 2502. The light source 2502 may include any suitable device for providing the necessary optical signals for various applications of the photonic device 2500, ranging from communication to sensing and imaging. The light source 2502 may be designed to emit light in a controlled and efficient manner to meet the specific requirements of the photonic device 2500. In some embodiment, the light source 2502 may be a coherent and monochromatic light source such as a laser, to produce light of a well-defined wavelength, low divergence, and high brightness. Examples of lasers that may be included in the light source 2502 include semiconductor lasers, such as edge-emitting lasers and vertical-cavity surface-emitting lasers (VCSELs). Such lasers may be particularly advantageous when the photonic device 2500 is used in applications like optical communication, sensing, and laser-based treatments in medical devices. In some embodiment, the light source 2502 may be a non-coherent light source such as an LED that emits light when an electric current is applied. LEDs may be simpler and more cost-effective than lasers, making them suitable for applications where high coherence is not required. Using an LED as the light source 2502 may be particularly advantageous when the photonic device 2500 is used in applications like displays, optical sensors, and short-distance communication systems. In further embodiments, the light source 2502 may include one or more of a superluminescent diode (SLD), a quantum dot, a rare-earth-doped fiber/waveguide, a plasma source (e.g., plasmonics and microplasma devices), a microcavity resonators, or a nonlinear optical device (e.g., a photonic device that uses nonlinear optical processes, such as frequency doubling or parametric amplification, to generate new wavelengths).

In some embodiments, the photonic device 2500 may include at least one light guiding component 2504, such as a waveguide, to manipulate and control the propagation of light. The light guiding component 2504 may include any suitable waveguide structures designed to confine and guide light along a specified path, allowing it to travel from one point to another with minimal loss and dispersion. Examples of waveguides that may be used as the light guiding component 2504 include planar waveguides, optical fibers, photonic crystal waveguides, and rib waveguides. In some embodiments, the light guiding component 2504 may include a material with a higher refractive index, known as the "core," surrounded by a material with a lower refractive index, known as the "cladding." The refractive index contrast between the core and cladding helps guide light within the core by using total internal reflection. Light is trapped within the core due to its reflection at the core-cladding interface. The light guiding component 2504 may support various modes of light propagation, such as single-mode or multimode.

In some embodiments, the photonic device 2500 may include at least one PIC 2506. A PIC 2506 may be a miniaturized and integrated optical device that incorporates photonic components, such as optical modulators, photodetectors, and waveguides, onto a single substrate. In some embodiments, the PIC 2506 may include one or more optical modulators for encoding data onto an optical signal, e.g., onto light generated by the light source 2502. An optical modulator of the PIC 2506 may change certain properties of an optical signal, such as its amplitude, frequency, or phase, in order to encode information onto the signal or to perform various signal processing functions. Examples of optical modulators that may be implemented in the PIC 2506 include electro-optic modulators, Mach-Zehnder Interferometric (MZI) modulators, or microring modulators. In some embodiments, the PIC 2506 may include one or more photodetectors for detecting and measuring the intensity of light or optical radiation across various wavelengths by converting incident light/photons into an electrical signal. Examples of photodetectors that may be implemented in the PIC 2506 include photodiodes, avalanche photodiodes, phototransistors, PIN diodes, CMOS image sensors, photomultiplier tubes, or quantum photodetectors. In some embodiments, the PIC 2506 may include one or more waveguides, e.g., any of the waveguides described with reference to the light guiding component 2504.

In some embodiments, the photonic device 2500 may include at least one optical coupling component 2508. The optical coupling component 2508 may include any suitable structures designed to facilitate efficient transfer of light between different optical devices, e.g., between the light source 2502 and the light guiding component 2504, between the light source 2502 and the PIC 2506, between the light guiding component 2504 and the PIC 2506, or between the light guiding component 2504 or the PIC 2506 and a further transmission line such as a fiber (not shown in FIG. 20) that may be coupled to the photonic device 2500. Examples of optical coupling elements that may be used to implement the optical coupling component 2508 include fiber couplers (e.g., fused fiber couplers or tapered fiber couplers), waveguide couplers, grating couplers, lens couplers, microlens couplers, prism couplers, fiber array couplers, or ball lens couplers. In some embodiment, the optical coupling component 2508 may include one or more optical couplers as described herein.

In some embodiments, the photonic device 2500 may include at least one wavelength splitter/multiplexer 2510, to combine or split multiple optical signals that are carried at different wavelengths. This may be particular advantageous if the photonic device 2500 is used in an optical communication system such as a wavelength division multiplexing (WDM) system or a dense wavelength division multiplexing (DWDM) system, where multiple data channels are transmitted simultaneously over a single optical fiber using different wavelengths of light. In various embodiments, the wavelength splitter/multiplexer 2510 may include a wavelength division multiplexer, a wavelength division demultiplexer, a passive optical add/drop multiplexer, an arrayed waveguide grating, a fused fiber couplers, and interleavers, or an optical filter based device.

In some embodiments, the photonic device 2500 may include at least one polarization splitter/multiplexer 2512, to combine or split multiple optical signals depending on their polarization. Similarly, in some embodiments, the photonic device 2500 may include at least one polarization controlling component 2514, to control polarization of light generated and manipulated in the photonic device 2500. In various embodiments, a polarization splitter/multiplexer 2512 and a polarization controlling component 2514 may include any suitable structure to enable the manipulation and management of polarized light signals, such as birefringent materials, waveguide structures, or specialized coatings that interact differently with different polarization states.

In some embodiments, the photonic device 2500 may include at least one general power splitter/multiplexer 2516, to combine or split multiple optical signals that in a manner that is not dependent on wavelength or polarization. For example, in some embodiments a power splitter/multiplexer 2516 may be used to tap off a small amount of optical power for purposes or power monitoring in the photonic device 2500. Examples of devices that may be used as a power splitter/multiplexer 2516 include directional couplers and multimode interference couplers.

In some embodiments, the photonic device 2500 may include at least one circulator 2518, also referred to as a "directional splitter." The circulator 2518 may include any suitable device configured to direct light signals to travel in a specific, one-way circular path through its ports. In some embodiments, the circulator 2518 may include magneto-optic materials or other techniques that create a Faraday rotation effect, where the polarization of light is rotated as it passes through the circulator 2518.

In some embodiments, the photonic device 2500 may include at least one mode splitter/multiplexer 2520, to combine or split multiple optical signals based on their guided modes. Examples of devices that may be used as a mode splitter/multiplexer 2520 include directional couplers, multimode interference couplers, tapered waveguide couplers, photonic lanterns, or photonic crystal splitters.

In some embodiments, the photonic device 2500 may include a processing device 2522 (e.g., one or more processing devices). As used herein, the term "processing device" or "processor" may refer to any device or portion of a device that processes electronic data from registers and/or memory to transform that electronic data into other electronic data that may be stored in registers and/or memory. The processing device 2522 may include one or more digital signal processors (DSPs), application-specific integrated circuits (ASICs), central processing units (CPUs), graphics processing units (GPUs), cryptoprocessors (specialized processors that execute cryptographic algorithms within hardware), server processors, or any other suitable processing devices. In some embodiments, the processing device 2522 may include circuitry to control operation of other components of the photonic device 2500, e.g., to control operation of the PIC 2506.

In some embodiments, the photonic device 2500 may include a memory 2524, which may itself include one or more memory devices such as volatile memory (e.g., DRAM), nonvolatile memory (e.g., read-only memory (ROM)), flash memory, solid state memory, and/or a hard drive. In some embodiments, the memory 2404 may include memory that shares a die with the processing device 2522. This memory may be used as cache memory and may include embedded DRAM (eDRAM) or spin transfer torque magnetic random-access memory (MRAM). In some embodiments, the memory 2524 may store instructions or data for the processing device 2522 to control operation of other components of the photonic device 2500, e.g., to control operation of the PIC 2506.

The above description of illustrated implementations of the disclosure, including what is described in the abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize.

Example 1 provides a photonic assembly, including a photonic integrated circuit (PIC) having a surface; a first layer, on the surface of the PIC, the first layer including an electrical integrated circuit (EIC) surrounded by a first material; and a second layer, on the first layer, the second layer including a second material, a microlens, and an alignment feature.

Example 2 provides the photonic assembly of example 1, where the first material includes silicon and oxygen; silicon, carbon, and nitrogen; silicon and nitrogen; or a photo-imageable dielectric having a percent transmission between greater than or equal to 95 percent and a refractive index between 1.3 and 1.6.

Example 3 provides the photonic assembly of example 1 or 2, where the second material includes silicon.

Example 4 provides the photonic assembly of any one of examples 1-3, further including a third layer between the first layer and the second layer, the third layer including an index matching adhesive.

Example 5 provides the photonic assembly of example 4, where the index matching adhesive includes an organic epoxy.

Example 6 provides the photonic assembly of any one of examples 1-5, further including a third layer between the first layer and the second layer, the third layer including an anti-reflection coating.

Example 7 provides the photonic assembly of example 6, where the anti-reflection coating includes silicon and nitrogen; or silicon, oxygen, and nitrogen.

Example 8 provides the photonic assembly of example 6 or 7, where the anti-reflection coating includes a plurality of layers, and one of the plurality of layers includes silicon and nitrogen, and an other of the plurality of layers includes silicon, nitrogen, and oxygen.

Example 9 provides the photonic assembly of example 8, where another of the plurality of layers of the anti-reflection coating includes silicon and oxygen.

Example 10 provides the photonic assembly of any one of examples 1-9, further including a bulk material on the surface of the PIC, where the first material is around and between the EIC and the bulk material.

Example 11 provides the photonic assembly of example 10, where the bulk material is fusion-bonded the surface of the PIC.

Example 12 provides the photonic assembly of example 10 or 11, where the bulk material includes silicon.

Example 13 provides the photonic assembly of any one of examples 10-12, where the bulk material includes a dummy die.

Example 14 provides the photonic assembly of any one of examples 1-13, further including a photonic device on the surface of the PIC, where the first material is around and between the EIC and the photonic device.

Example 15 provides the photonic assembly of example 14, where the photonic device is fusion-bonded to the surface of the PIC.

Example 16 provides the photonic assembly of example 14 or 15, where the photonic device includes a non-silicon photonic device.

Example 17 provides the photonic assembly of example 16, where a material of the non-silicon photonic device includes gallium and arsenic, indium and phosphorous, or lithium and niobium.

Example 18 provides the photonic assembly of any one of examples 1-17, where the EIC is coupled to the PIC by hybrid bond interconnects.

Example 19 provides the photonic assembly of any one of examples 1-18, where an optical pathway from the PIC to the microlens is perpendicular to the surface of the PIC through the first material and the second material.

Example 20 provides the photonic assembly of any one of examples 1-19, where the alignment feature of the second layer is a first alignment feature, and the photonic assembly further including a medium for transmitting optical signals, on the second layer, where the medium includes a second alignment feature, where the second alignment feature is aligned with the first alignment feature, and an optical fiber, where the optical fiber has an input arranged to receive an optical signal from the microlens.

Example 21 provides the photonic assembly of example 20, where the microlens includes an array of microlenses and the optical fiber includes an array of optical fibers, where each of the optical fibers has the input arranged to receive the optical signal from a corresponding one of the microlenses.

Example 22 provides the photonic assembly of example 20 or 21, where the medium is a first portion of the medium, and the photonic assembly further includes a second portion of the medium, where the second portion of the medium is perpendicular to the surface of the first portion extending along a side surface of the PIC and the optical fiber is coupled to the second portion of the medium.

Example 23 provides the photonic assembly of any one of examples 20-22, where the medium for transmitting optical signals is glass.

Example 24 provides the photonic assembly of any one of examples 20-23, where the medium for transmitting optical signals is silicon.

Example 25 provides the photonic assembly of any one of examples 20-24, where the medium for transmitting optical signals is coupled to the second material of the second layer by an optical glue.

Example 26 provides the photonic assembly of any one of examples 1-25, further including a die coupled to the PIC by interconnects.

Example 27 provides the photonic assembly of example 26, where the interconnects include solder.

Example 28 provides the photonic assembly of example 26 or 27, further including a processor integrated circuit coupled to the die.

Example 29 provides the photonic assembly of any one of examples 26-28, further including a memory die coupled to the die.

Example 30 provides an integrated circuit (IC) device, including a first interposer including a conductive pathway; a second interposer including an optical pathway; and a first assembly, including an electrical integrated circuit (EIC) surrounded by a first material; and a second material on the EIC and on the first material, the second material including a microlens and a feature for aligning with a second assembly, where the optical pathway extends through the first material and the second material and the microlens is optically coupled to the optical pathway.

Example 31 provides the IC device of example 30, where the first interposer includes a first surface and an opposing second surface, the second interposer includes a third surface and an opposing fourth surface, the second surface of the first interposer is coupled to the third surface of the second interposer, and the EIC is coupled to the fourth surface of the second interposer.

Example 32 provides the IC device of example 30 or 31, where the first interposer includes a first surface and an opposing second surface, the second interposer includes a third surface and an opposing fourth surface, the first surface of the first interposer is coupled to the fourth surface of the second interposer, the EIC is coupled to the second surface of the first interposer, and the optical pathway extends through the first interposer.

Example 33 provides the IC device of any one of examples 30-32, where the first interposer includes a first surface and an opposing second surface, the second interposer includes a third surface and an opposing fourth surface, and the optical pathway is a first optical pathway extending through the fourth surface, and the second interposer further includes a second optical pathway extending through the third surface.

Example 34 provides the IC device of any one of examples 30-33, where the conductive pathway is a first conductive pathway, and the second interposer further includes a second conductive pathway coupled to the first conductive pathway by a hybrid bond interconnect.

Example 35 provides the IC device of any one of examples 30-34, further including a processor integrated circuit (XPU) coupled to the conductive pathway in the first interposer.

Example 36 provides the IC device of any one of examples 30-35, where the optical pathway in the second interposer includes a waveguide.

Example 37 provides the IC device of any one of examples 30-36, where the optical pathways is one of a plurality of optical pathways and the first assembly is one of a plurality of first assemblies.

Example 38 provides an assembly, including a medium for transmitting optical signals, the medium including a surface; an alignment feature at the surface of the medium; and an optical fiber coupled to the medium.

Example 39 provides the assembly of example 38, where the surface is a first surface and the medium further includes a second surface opposite the first surface, and the optical fiber is coupled to the second surface of the medium.

Example 40 provides the assembly of example 38 or 39, where the medium is a first portion of the medium, and the assembly further includes a second portion of the medium, where the second portion of the medium is perpendicular to the surface of the first portion and the optical fiber is coupled to the second portion of the medium.

Example 41 provides the assembly of any one of examples 38-40, where the medium for transmitting optical signals is glass.

Example 42 provides the assembly of any one of examples 38-41, where the medium for transmitting optical signals is silicon.

Example 43 provides the assembly of any one of examples 38-42, where the alignment feature is one of a plurality of alignment features.

Example 44 provides the assembly of any one of examples 38-43, where the optical fiber is one of a plurality of optical fibers. <u>PIC/EIC Stack</u>

Example 45 provides an assembly, including a photonic integrated circuit (PIC) having a surface; an electrical integrated circuit (EIC) on the surface of the PIC and coupled to the PIC by hybrid bond interconnects; and a material, for transmitting an optical signal, on the surface of the PIC and around the EIC.

Example 46 provides the assembly of example 45, where the material includes silicon and oxygen.

Example 47 provides the assembly of example 45 or 46, where the PIC transmits an optical signal vertically through the material.

Example 48 provides the assembly of any one of examples 45-47, where the EIC is positioned in a center of the PIC.

Example 49 provides the assembly of any one of examples 45-48, where the EIC is positioned along an edge of the PIC.

Example 50 provides the assembly of any one of examples 45-49, further including a bulk material on the surface of the PIC, where the material is around and between the EIC and the bulk material.

Example 51 provides the assembly of example 50, where the bulk material is fusion-bonded the surface of the PIC.

Example 52 provides the assembly of example 50 or 51, where the bulk material includes silicon.

Example 53 provides the assembly of any one of examples 50-52, where the bulk material includes a dummy die.

Example 54 provides the assembly of any one of examples 45-53, further including a photonic device on the surface of the PIC, where the material is around and between the EIC and the photonic device.

Example 55 provides the assembly of example 54, where the photonic device is fusion-bonded to the surface of the PIC.

Example 56 provides the assembly of example 54 or 55, where the photonic device includes a non-silicon photonic device.

Example 57 provides the assembly of example 56, where a material of the non-silicon photonic device includes gallium and arsenic, indium and phosphorous, or lithium and niobium.

Example 58 provides an integrated circuit (IC) package, including a first layer including conductive pathways through a dielectric material; a second layer on the first layer, the second layer including a bridge die and through-vias surrounded by an insulating material; and a third layer on the second layer, the third layer including a processor integrated circuit (XPU) and a photonic assembly coupled to the bridge die, where the photonic assembly includes a photonic integrated circuit (PIC) having a surface; an electrical integrated circuit (EIC) on the surface of the PIC and surrounded by a first material; and a second material on the EIC and the first material, the second material including a microlens and an alignment feature.

Example 59 provides the IC package of example 58, where the first material includes silicon and oxygen; silicon, carbon, and nitrogen; silicon and nitrogen; or a photo-imageable dielectric having a percent transmission between greater than or equal to 95 percent and a refractive index between 1.3 and 1.6.

Example 60 provides the IC package of example 58 or 59, where the second material includes silicon.

Example 61 provides the IC package of any one of examples 58-60, where the insulating material includes a capillary underfill material, a molded underfill material, a mold material, a resin material, an epoxy material, or other inorganic material.

Example 62 provides the IC package of any one of examples 58-61, where the photonic assembly further includes an index matching adhesive between the first material and the second material.

Example 63 provides the IC package of example 62, where the index matching adhesive includes an organic epoxy.

Example 64 provides the IC package of any one of examples 58-63, where the photonic assembly further includes an anti-reflection coating between the first material and the second material.

Example 65 provides the IC package of example 64, where the anti-reflection coating includes silicon and nitrogen; or silicon, oxygen, and nitrogen.

Example 66 provides the IC package of example 64 or 65, where the anti-reflection coating includes a plurality of layers, and one of the plurality of layers includes silicon and nitrogen, and an other of the plurality of layers includes silicon, nitrogen, and oxygen.

Example 67 provides the IC package of example 66, where another of the plurality of layers of the anti-reflection coating includes silicon and oxygen.

Example 68 provides the IC package of any one of examples 58-67, where the photonic assembly further includes a bulk material on the surface of the PIC, and the first material is around and between the EIC and the bulk material.

Example 69 provides the IC package of example 68, where the bulk material is fusion-bonded the surface of the PIC.

Example 70 provides the IC package of example 68 or 69, where the bulk material includes silicon.

Example 71 provides the IC package of any one of examples 58-70, where the photonic assembly further includes a photonic device on the surface of the PIC, and the first material is around and between the EIC and the photonic device.

Example 72 provides the IC package of example 71, where the photonic device is fusion-bonded to the surface of the PIC.

Example 73 provides the IC package of example 72, where the photonic device includes a non-silicon photonic device.

Example 74 provides the IC package of example 73, where a material of the non-silicon photonic device includes gallium and arsenic, indium and phosphorous, or lithium and niobium.

Example 75 provides the IC package of any one of examples 58-74, where the EIC is coupled to the PIC by hybrid bond interconnects.

Example 76 provides the IC package of any one of examples 58-75, where the alignment feature of the second material is a first alignment feature, and the photonic assembly further includes a medium for transmitting optical signals, on the second material, the medium including a second alignment feature aligned with the first alignment feature, and an optical fiber coupled to the medium and arranged to receive an optical signal from the microlens.

Example 77 provides the IC package of example 76, where the microlens includes an array of microlenses and the optical fiber includes an array of optical fibers, where each of the optical fibers is arranged to receive the optical signal from a corresponding one of the microlenses.

Example 78 provides the IC package of example 76 or 77, where the medium is a first portion of the medium, and the photonic assembly further includes a second portion of the medium, where the second portion of the medium is perpendicular to the surface of the first portion extending along a side surface of the PIC and the optical fiber is coupled to the second portion of the medium.

Example 79 provides the IC package of any one of examples 76-78, where the medium for transmitting optical signals is glass.

Example 80 provides the IC package of any one of examples 76-79, where the medium for transmitting optical signals is silicon.

## Claims

1. A photonic assembly, comprising:
a photonic integrated circuit (PIC) having a surface;
a first layer, on the surface of the PIC, the first layer including an electrical integrated circuit (EIC) surrounded by a first material; and
a second layer, on the first layer, the second layer including a second material, a microlens, and an alignment feature.

2. The photonic assembly of claim 1, wherein the first material includes silicon and oxygen; silicon, carbon, and nitrogen; silicon and nitrogen; or a photo-imageable dielectric having a percent transmission between greater than or equal to 95 percent and a refractive index between 1.3 and 1.6.

3. The photonic assembly of claim 1 or 2, wherein the second material includes silicon.

4. The photonic assembly of any one of claims 1-3, further comprising:
a third layer between the first layer and the second layer, the third layer including an index matching adhesive.

5. The photonic assembly of claim 4, wherein the index matching adhesive includes an organic epoxy.

6. The photonic assembly of any one of claims 1-3, further comprising:
a third layer between the first layer and the second layer, the third layer including an anti-reflection coating.

7. The photonic assembly of claim 6, wherein the anti-reflection coating includes silicon and nitrogen; or silicon, oxygen, and nitrogen.

8. The photonic assembly of claim 6, wherein the anti-reflection coating comprises a plurality of layers, and one of the plurality of layers includes silicon and nitrogen, and an other of the plurality of layers includes silicon, nitrogen, and oxygen.

9. The photonic assembly of claim 8, wherein another of the plurality of layers of the anti-reflection coating includes silicon and oxygen.

10. The photonic assembly of any one of claims 1-9, further comprising:
a bulk material, in the first layer on the surface of the PIC, wherein the first material is around and between the EIC and the bulk material, and wherein the bulk material includes silicon.

11. The photonic assembly of any one of claims 1-9, further comprising:
a photonic device, in the first layer on the surface of the PIC, wherein the first material is around and between the EIC and the photonic device, and wherein the photonic device includes a non-silicon photonic device.

12. The photonic assembly of any one of claims 1-11, wherein the alignment feature of the second layer is a first alignment feature, and the photonic assembly further comprising:
a medium for transmitting optical signals, on the second layer, wherein the medium includes:
a second alignment feature, wherein the second alignment feature is aligned with the first alignment feature, and
an optical fiber, wherein the optical fiber has an input arranged to receive an optical signal from the microlens.

13. An integrated circuit (IC) device, comprising:
a first interposer including a conductive pathway;
a second interposer including an optical pathway; and
a first assembly, comprising:
an electrical integrated circuit (EIC) surrounded by a first material; and
a second material on the EIC and on the first material, the second material including a microlens and a feature for aligning with a second assembly, wherein the optical pathway extends through the first material and the second material and the microlens is optically coupled to the optical pathway.

14. The IC device of claim 13, wherein the first interposer includes a first surface and an opposing second surface, the second interposer includes a third surface and an opposing fourth surface, the second surface of the first interposer is coupled to the third surface of the second interposer, and the EIC is coupled to the fourth surface of the second interposer.

15. The IC device of claim 13, wherein the first interposer includes a first surface and an opposing second surface, the second interposer includes a third surface and an opposing fourth surface, the first surface of the first interposer is coupled to the fourth surface of the second interposer, the EIC is coupled to the second surface of the first interposer, and the optical pathway extends through the first interposer.
